# EUROPEAN PATENT APPLICATION

(11) **EP 2 378 113 A2**
(43) Date of publication of application: **19.10.2011**
(21) Application number: 09833610.0
(22) Date of filing: 11.12.2009
(51) Int. Cl.: F03B 17/06, F03B 13/26, F03B 13/22, F03B 11/02, F03B 3/12

(54) **TIDAL CURRENT POWER GENERATOR HAVING AN IMPELLER-TYPE ROTATING BLADE**

(30) Priority: 16.12.2008 KR 20080127838; 13.01.2009 KR 20090002655; 04.02.2009 KR 20090008757; 05.08.2009 KR 20090071886
(71) Applicant: Yu, Je-Woo, Seoul 121-200 (KR)
(72) Inventor: Yu, Je-Woo, Seoul 121-200 (KR)
(74) Representative: Bittner, Thomas L.
(86) International application number: PCT/KR2009/007440
(87) International publication number: WO 2010/071332

(57) **Abstract**

A tidal current power generator according to an embodiment of the present invention includes: a generator column; an impeller-type rotating blade provided on the upper portion of the generator column; and a first sealed chamber having a bottom portion formed with a lower inlet into which a rotating shaft of the impeller-type rotating blade is vertically introduced and having an inner space in which a vertical shaft generator is disposed to produce electrical energy from the rotational motion of the rotating shaft of the impeller-type rotating blade.

## Description

### TECHNICAL FIELD

The present invention relates to a tidal current power generator for producing electrical energy by using ocean currents or the running water of rivers and streams, and more particularly to a tidal current power generator having an impeller-type rotating blade and including a vertical shaft generator that uses the rotating shaft of the impeller-type rotating blade as its vertical shaft.

### BACKGROUND ART

Wave power generation, tidal power generation, tidal current power generation, ocean temperature difference power generation, and the like have been developed to utilize ocean energy. Among them, tidal current power generation refers to a means for generating electricity by using tidal currents caused by tides and ebbs or by means of a water turbine generator installed in a place where the water current is swift. Tidal current power generation is different from tidal power generation in that the former uses the natural flow of tidal currents in its entirety, but the latter generates electricity by capturing seawater in a dam and then allowing the seawater to flow through a turbine, thereby driving the turbine by using the head drop of the seawater.

Tidal current power generation is regarded as an environmentally-friendly source of alternative energy because it does not require the securing of a reservoir by building a dam, allows the free passage of ships, does not impede the movement of fish, and has virtually no impact on the surrounding ecosystem.

However, although tidal current energy is abundant, there are many technical difficulties in the practical use of the tidal current energy because tidal current energy has a low unit density and large-scale public works are required to install power generation equipment using tidal current energy.

### DISCLOSURE

### TECHNICAL PROBLEM

A problem to be solved by the present invention is to provide a tidal current power generator that can reduce or prevent its metallic units from being corroded by seawater, in particular, seawater salt.

Another problem to be solved by the present invention is to provide a tidal current power generator that can reduce or prevent lubricating oil, which is supplied to bearings used therein, fi-om being washed out by seawater thereby contaminating the sea.

Yet another problem to be solved by the present invention is to provide a tidal current power generator that makes it possible to simply and easily repair and maintain its units, which are submerged in seawater.

Still yet another problem to be solved by the present invention is to provide a tidal current power generator which makes tidal power generation possible even in a seabed polluted with many fishing nets and ropes or in a stream or river into which a lot of waste and many structures flow during a flood.

Still yet another problem to be solved by the present invention is to provide a tidal current power generator which can improve the rotation efficiency of an impeller-type rotating blade.

It should be appreciated that problems to be solved by the present invention are not limited to those mentioned above, and other problems to be solved by the present invention, not mentioned herein, will be apparent to those skilled in the art from the following description.

### TECHNICAL SOLUTION

In order to solve at least one of the above problems, in accordance with a first aspect of the present invention, the present invention provides a tidal current power generator including: a generator column; an impeller-type rotating blade provided on a upper portion of the generator column; a first sealed chamber having a bottom portion formed with a lower inlet into which a rotating shaft of the impeller-type rotating blade is vertically introduced and having an inner space in which a vertical shaft generator and units necessary for power generation are disposed to generate electricity from the rotating shaft; and buoyancy chambers coupled to a lower end of the rotating shaft and an upper end of the generator column respectively. Here, since the vertical shaft generator and the units necessary for power generation are disposed in the first sealed chamber, it is possible to separate the vertical shaft generator and the units necessary for power generation from seawater and consequently prevent them from being corroded by the seawater. Also, the buoyancy chambers can reduce the weight load exerted to the rotating shaft and the generator column.

In the first aspect of the tidal current power generator according to the present invention, a wave-shaped induction casing for increasing a rotational force of the impeller-type rotating blade may be mounted to the impeller-type rotating blade. Also, a support structure of the wave-shaped induction casing may be coupled to the upper portion of the generator column.

In the first aspect of the tidal current power generator according to the present invention, a rotating shaft shell for reducing or preventing the rotating shaft of the impeller-type rotating blade from being corroded may be coupled to the rotating shaft of the impeller-type rotating blade. Here, the rotating shaft shell may be made of a material that is not readily corroded by seawater, such as carbon fiber or plastic. In this way, the rotating shaft of the impeller-type rotating blade can be prevented from coming into contact with seawater to thereby be corroded by the seawater.

In the first aspect of the tidal current power generator according to the present invention, the tidal current power generator may further include a rudder provided on the upper portion of the generator column to control positions of the impeller-type rotating blade and the vertical shaft generator according to changes in tidal current direction. Also, the tidal current power generator may further include a generator top column direction control chamber constituting a second sealed chamber in which bearings and auxiliary units for assisting rotation of the upper portion of the generator column are disposed. Here, since the bearings and auxiliary units for assisting the rotation of the upper portion of the generator column are disposed in the second sealed chamber, they can be separated from seawater and consequently be prevented from being corroded by the seawater. In addition, it is possible to reduce or prevent lubricating oil used in the bearings from flowing into and contaminating the sea. However, the rudder and/or the generator top column direction control chamber may not be used in river and stream regions or ocean current regions where the flow direction of tidal currents is not readily changed.

In the first aspect of the tidal current power generator according to the present invention, the generator column may be divided into two or more stages by including a plurality of sub-columns that are connected to each other by a joint with a concave-convex structure. This is particularly advantageous when the water in which the tidal current power generator is installed is not shallow.

In the first aspect of the tidal current power generator according to the present invention, two or more vertical shaft generators and two or more impeller-type rotating blades may be connected and mounted to one generator column.

In the first aspect of the tidal current power generator according to the present invention, one or more vertical shaft generators and one or more impeller-type rotating blades may be connected and mounted to a plurality of generator columns.

In the first aspect of the tidal current power generator according to the present invention, the tidal current power generator may be driven by ocean currents, running water of rivers and streams, or wind forces.

In the first aspect of the tidal current power generator according to the present invention, the first and second sealed cambers and the buoyancy chambers may have a streamlined shape. Of course, the first and second sealed chambers and the buoyancy chambers may have any shape other than the streamlined shape.

In order to solve at least one of the above problems, in accordance with a second aspect of the present invention, there is provided a tidal current power generator including: a sealed chamber having a bottom portion formed with a lower inlet; an impeller-type rotating blade having a rotating shaft vertically introduced into an inner space of the sealed chamber from the lower inlet of the sealed chamber; a vertical shaft generator disposed about the rotating shaft of the impeller-type rotating blade; a rotating shaft fixing chamber coupled to the rotating shaft of the impeller-type rotating blade to prevent the rotating shaft of the impeller-type rotating blade from vibrating and twisting while maintaining a rotational force of the rotating shaft of the impeller-type rotating blade, the rotating shaft fixing chamber having a bottom portion formed with a lower inlet; and a fixing chamber support shaft vertically introduced into an inner space of the rotating shaft fixing chamber from the lower inlet of the rotating shaft fixing chamber.

Here, one or more of the sealed chamber and the rotating shaft fixing chamber may have an anticorrosive storage chamber, in which an anticorrosive lighter than seawater is stored, in a lower portion thereof. The sealed chamber or the rotating shaft fixing chamber may be filled with compressed air, but this is not sufficient to completely prevent moisture mixed with seawater salt from flowing into the sealed chamber or the rotating shaft fixing chamber. However, the anticorrosive storage chamber provided in the lower portion of the sealed chamber or the rotating shaft fixing chamber makes it possible to reduce or prevent such moisture from flowing into the sealed chamber or the rotating shaft fixing chamber.

In the second aspect of the tidal current power generator according to the present invention, a recess may be formed between the lower inlet of the sealed chamber and a portion of the rotating shaft of the impeller-type rotating blade, which is adjacent to the lower inlet of the sealed chamber, and a concave-shaped ring may be inserted into the recess.

In the second aspect of the tidal current power generator according to the present invention, a recess may be formed between the lower inlet of the rotating shaft fixing chamber and a portion of the fixing chamber support shaft, which is adjacent to the lower inlet of the rotating shaft fixing chamber, and a concave-shaped ring may be inserted into the recess.

The sealed chamber or the rotating shaft fixing chamber may be filled with compressed air. However, in the process of injecting the compressed air into the sealed chamber or the rotating shaft fixing chamber, the anticorrosive may flow out of the sealed chamber or the rotating shaft fixing chamber. However, the recess and the ring provided in the sealed chamber or the rotating shaft fixing chamber make it possible to reduce or prevent the anticorrosive from flowing out of the sealed chamber or the rotating shaft fixing chamber.

In the second aspect of the tidal current power generator according to the present invention, in order to vertically connect the rotating shaft of the impeller-type rotating blade and the sealed chamber while maintaining a rotational relation between the rotating shaft of the impeller-type rotating blade and the sealed chamber, the tidal current power generator may further include a thrust bearing disposed in an upper portion of the rotating shaft of the impeller-type rotating blade. Here, depending on a size of the tidal current power generator, the thrust bearing may be further provided in other portions including a lower portion of the rotating shaft of the impeller-type rotating blade, as well as the upper portion of the rotating shaft of the impeller-type rotating blade. Also, in order to prevent right and left shaking while maintaining a rotational relation between the rotating shaft fixing chamber and the fixing chamber support shaft, the tidal current power generator may further include a rotating shaft bearing disposed between the rotating shaft fixing chamber and the fixing chamber support shaft. For example, the rotating shaft bearing may be a ball bearing.

In the second aspect of the tidal current power generator according to the present invention, the tidal current power generator may further include a direction control chamber disposed below the rotating shaft fixing chamber, having an upper portion connected to a lower end of the fixing chamber support shaft, and having a bottom portion formed with a lower inlet; and a direction control chamber support shaft vertically introduced into an inner space of the direction control chamber from the lower inlet of the direction control chamber.

When the tidal current power generator further includes the direction control chamber and the direction control chamber support shaft, the direction control chamber may have an anticorrosive storage chamber, in which an anticorrosive lighter than seawater is stored, in a lower portion thereof. Accordingly, as in the case where the sealed chamber or the rotating shaft fixing chamber has the anticorrosive storage chamber in its lower portion, it is possible to reduce or prevent moisture mixed with seawater salt from flowing into the direction control chamber. Also, a recess may be formed between the lower inlet of the direction control chamber and a portion of the direction control chamber support shaft, which is adjacent to the lower inlet of the direction control chamber, and a concave-shaped ring may be inserted into the recess. Accordingly, as in the case where the sealed chamber or the rotating shaft fixing chamber has the recess and the ring, it is possible to reduce or prevent the anticorrosive from flowing out of the direction control chamber.

When the tidal current power generator further includes the direction control chamber and the direction control chamber support shaft, in order to vertically connect the direction control chamber and the direction control chamber support shaft while maintaining a rotational relation between the direction control chamber and the direction control chamber support shaft, the tidal current power generator may further include a thrust bearing disposed in an upper portion of the direction control chamber support shaft. Here, depending on a size of the tidal current power generator, the thrust bearing may be further provided in other portions including a lower portion of the direction control chamber support shaft, as well as the upper portion of the direction control chamber support shaft. Also, in order to prevent right and left shaking while maintaining a rotational relation between the direction control chamber and the direction control chamber support shaft, the tidal current power generator may further include a rotating shaft bearing disposed between the direction control chamber and the direction control chamber support shaft. For example, the rotating shaft bearing may be a ball bearing.

When the tidal current power generator further includes the direction control chamber and the direction control chamber support shaft, the tidal current power generator may further include disks that are rotatable centered on the rotating shaft of the impeller-type rotating blade, the disks including an upper disk disposed above the impeller-type rotating blade and a lower disk disposed below the impeller-type rotating blade and coupled to a side of the direction control chamber; a triangular-shaped induction casing coupled to one of the disks; and a direction control blade coupled to the other disk. Here, the induction casing is intended to increase a rotational force of the impeller-type rotating blade by inducing flow of fluid, and may have a curved surface on one side thereof.

When the tidal current power generator further includes the direction control chamber and the direction control chamber support shaft, the tidal current power generator may further include a direction control auxiliary blade provided on the upper disk to assist in controlling a position of the induction casing. Also, the tidal current power generator may further include debris guards provided on circumferences of the disks to prevent foreign materials from entering through gaps between the impeller-type rotating blade and the disks. Also, the tidal current power generator may further include an induction casing support structure connected to the direction control blade to support the induction casing. In this case, since the induction casing support structure is not fixed to a column positioned thereabout, the induction casing can be easily moved to an appropriate position according to changes in tidal current direction.

However, one or more of the induction casing, the direction control chamber, the direction control chamber support shaft, the upper disk, the lower disk, the direction control blade, and the direction control auxiliary blade as described above may not be used in river and stream regions or ocean current regions where the flow direction of tidal currents is not readily changed.

In the second aspect of the tidal current power generator according to the present invention, the direction control chamber support shaft may be mounted to one generator column, and a lower end of the direction control chamber support shaft may be coupled to an upper end of the generator column by a concave-convex connection structure. Here, an upwardly angled, L-shaped rim may be provided on a circumference of the upper end of the generator column. Also, an anticorrosive pocket having a concave-convex shape corresponding to the concave-convex connection structure and infiltrated with an anticorrosive heavier than seawater may be inserted between the lower end of the direction control chamber support shaft and the upper end of the generator column. In other words, when the direction control chamber support shaft and the generator column are coupled to each other, the anticorrosive pocket is first inserted into the upper end of the generator column, and then the direction control chamber support shaft is coupled thereon. In this way, it is possible to reduce or prevent the coupled portion of the direction control chamber support shaft and the generator column from being corroded. In this case, since the anticorrosive is heavier than seawater, it cannot flow out into the seawater.

In the second aspect of the tidal current power generator according to the present invention, the rotating shaft fixing chamber may be coupled to a lower portion of the rotating shaft of the impeller-type rotating blade to prevent the rotating shaft of the impeller-type rotating blade from vibrating and twisting while maintaining a rotational force of the lower portion of the rotating shaft of the impeller-type rotating blade, and the vertical shaft generator may be mounted to an upper portion of the rotating shaft of the impeller-type rotating blade. Here, the vertical shaft generator may be a rotating-field generator.

In the second aspect of the tidal current power generator according to the present invention, the rotating shaft fixing chamber may be coupled to an upper portion of the rotating shaft of the impeller-type rotating blade to prevent the rotating shaft of the impeller-type rotating blade from vibrating and twisting while maintaining a rotational force of the upper portion of the rotating shaft of the impeller-type rotating blade, and the vertical shaft generator may be mounted to a lower portion of the rotating shaft of the impeller-type rotating blade. Here, the vertical shaft generator may be a rotating-armature generator.

In the second aspect of the tidal current power generator according to the present invention, the vertical shaft generator may be mounted to one column or between one column and one or more other columns standing by the one column.

In the second aspect of the tidal current power generator according to the present invention, a plurality of vertical shaft generators may be mounted between a plurality of columns arranged lengthwise and crosswise.

In order to solve at least one of the above problems, in accordance with a third aspect of the present invention, there is provided a tidal current power generator including: a first sealed chamber having a bottom portion formed with a lower inlet and having an inner space in which a vertical shaft generator is disposed; an impeller-type rotating blade having a rotating shaft vertically introduced into the inner space of the first sealed chamber from the lower inlet of the first sealed chamber; a rotating shaft fixing chamber rotated with the rotating shaft of the impeller-type rotating blade and having a bottom portion formed with a lower inlet; a casing rotating shaft vertically introduced into an inner space of the rotating shaft fixing chamber from the lower inlet of the rotating shaft fixing chamber; a casing rotating chamber rotated with the casing rotating shaft and having a bottom portion formed with a lower inlet; a rotating chamber support shaft vertically introduced into an inner space of the casing rotating chamber from the lower inlet of the casing rotating chamber; and an induction casing rotated with the casing rotating chamber to increase rotation efficiency of the impeller-type rotating blade.

In the third aspect of the tidal current power generator according to the present invention, the tidal current power generator may further include a second sealed chamber having a bottom portion formed with a lower inlet. An upper portion of the induction casing may be connected to the second sealed chamber, and a lower portion of the induction casing may be connected to the casing rotating chamber. Here, the upper portion of the induction casing may be connected to the second sealed chamber via a vertical cylinder and/or the lower portion of the induction casing may be connected to the casing rotating chamber via a vertical cylinder. Also, the tidal current power generator may further include a thrust bearing for connecting the inner space of the second sealed chamber and the upper portion of the induction casing while maintaining a rotational force of the induction casing.

In the third aspect of the tidal current power generator according to the present invention, the tidal current power generator may further include a thrust bearing for connecting the casing rotating chamber and the rotating chamber support shaft while maintaining a rotational force of the casing rotating chamber.

In the third aspect of the tidal current power generator according to the present invention, one or more of the first sealed chamber, the rotating shaft fixing chamber, the casing rotating chamber may have an anticorrosive storage chamber, in which an anticorrosive lighter than seawater is stored, in a lower portion thereof.

In the third aspect of the tidal current power generator according to the present invention, a recess may be formed between the lower inlet of the first sealed chamber and the rotating shaft of the impeller-type rotating blade, between the lower inlet of the rotating shaft fixing chamber and the casing rotating shaft, and/or between the lower inlet of the casing rotating chamber and the rotating chamber support shaft. A concave-shaped ring may be inserted into the recess.

In the third aspect of the tidal current power generator according to the present invention, the tidal current power generator may further include a second sealed chamber disposed below the first sealed chamber and having a bottom portion formed with a lower inlet.

In the third aspect of the tidal current power generator according to the present invention, the tidal current power generator may further include a second sealed chamber disposed above the first sealed chamber and having a bottom portion formed with a lower inlet and a top portion formed with an upper inlet. Also, the tidal current power generator may further include a second sealed chamber support shaft coupled to a top portion of the first sealed chamber and passing through the lower and upper inlets of the second sealed chamber.

In the third aspect of the tidal current power generator according to the present invention, the vertical shaft generator may use the rotating shaft of the impeller-type rotating blade as a vertical shaft thereof.

In the third aspect of the tidal current power generator according to the present invention, the tidal current power generator may further include a buoyancy chamber coupled to a lower end of the rotating shaft of the impeller-type rotating blade.

In the third aspect of the tidal current power generator according to the present invention, the induction casing may incorporate a plurality of venturi tubes disposed on a side thereof where fluid flows out of the induction casing and having outlets that are sequentially enlarged in width.

In the third aspect of the tidal current power generator according to the present invention, the induction casing may be attached with a T-shaped tail blade having a leftward and rightward width that can be differently adjusted in order to balance each reaction force of the induction casing.

In the third aspect of the tidal current power generator according to the present invention, the impeller-type rotating blade may incorporate an impeller-type auxiliary blade projecting from a concave surface of the impeller-type rotating blade and extending radially outwardly from the rotating shaft of the impeller-type rotating blade. Here, the impeller-type auxiliary blade allows a direction of fluid flow, which rotates the impeller-type rotating blade by pushing it backward, to be orthogonal to the impeller-type rotating blade.

Other details regarding embodiments of the present invention are included in the following detailed description and the accompanying drawings.

### EFFECT OF THE INVENTION

A tidal current power generator according to the present invention provides one or more of the following effects.

In the first place, it is possible to reduce or prevent metallic units of the tidal current power generator from being corroded by seawater, in particular, seawater salt.

In the second place, it is possible to reduce or prevent lubricating oil, which is supplied to bearings used in the tidal current power generator, from being washed out by seawater and thereby contaminating the sea.

In the third place, units of the tidal current power generator, which are submerged in seawater, can be simply and easily repaired and maintained.

In the fourth place, tidal power generation is possible even in a seabed polluted with many fishing nets and ropes or in a stream or river into which a lot of waste and many structures flow during a flood.

In the fifth place, the rotation efficiency of an impeller-type rotating blade can be improved.

### BRIEF DESCRIPTION OF THE DRAWINGS

FIG. 1 is a perspective view illustrating an overall structure of a tidal current power generator in accordance with a first aspect of the present invention;
FIG. 2 is a sectional view illustrating an internal structure of an impeller-type rotating blade and a first sealed chamber of FIG. 1;
FIG. 3 is a sectional view illustrating an internal structure of a generator top column direction control chamber of FIG. 1;
FIG. 4 is a sectional view illustrating a rotating shaft of the impeller-type rotating blade of FIG. 1;
FIG. 5 is a perspective view for explaining that a generator column of FIG. 1 has a concave-convex connection structure;
FIG. 6 is a sectional view illustrating an induction casing;
FIG. 7 is a perspective view illustrating the tidal current power generator of FIG. 1, which is provided with the induction casing of FIG. 6;
FIG. 8 is a perspective view illustrating an overall structure of a tidal current power generator in accordance with a second aspect of the present invention;
FIG. 9 is a sectional view illustrating an internal structure of the tidal current power generator of FIG. 8;
FIG. 10 is a detailed view of a portion where a generator top column and a generator bottom column are connected;
FIG. 11 is a sectional view showing that one vertical shaft generator as described with reference to FIGS. 8 and 9 is provided between two generator columns;
FIG. 12 is a perspective view showing that a plurality of vertical shaft generators are provided between a plurality of columns arranged lengthwise and crosswise;
FIG. 13 is a perspective view illustrating an overall structure of a tidal current power generator in accordance with a third aspect of the present invention;
FIG. 14 is a sectional view illustrating a first embodiment of the tidal current power generator in accordance with the third aspect of the present invention;

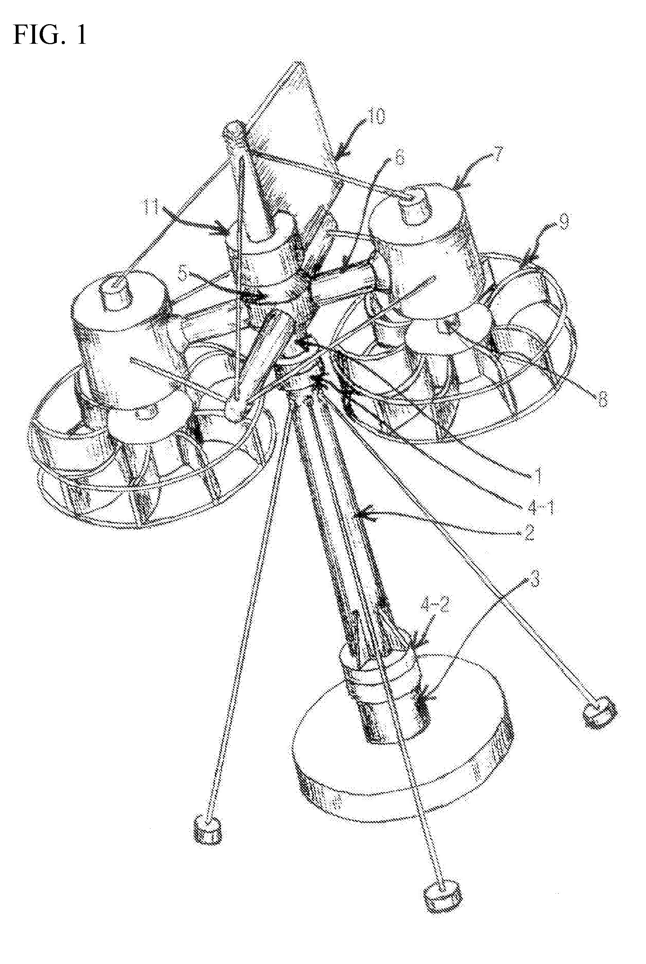

FIG. 1 is a sectional view illustrating a second embodiment of the tidal current power generator in accordance with the third aspect of the present invention;

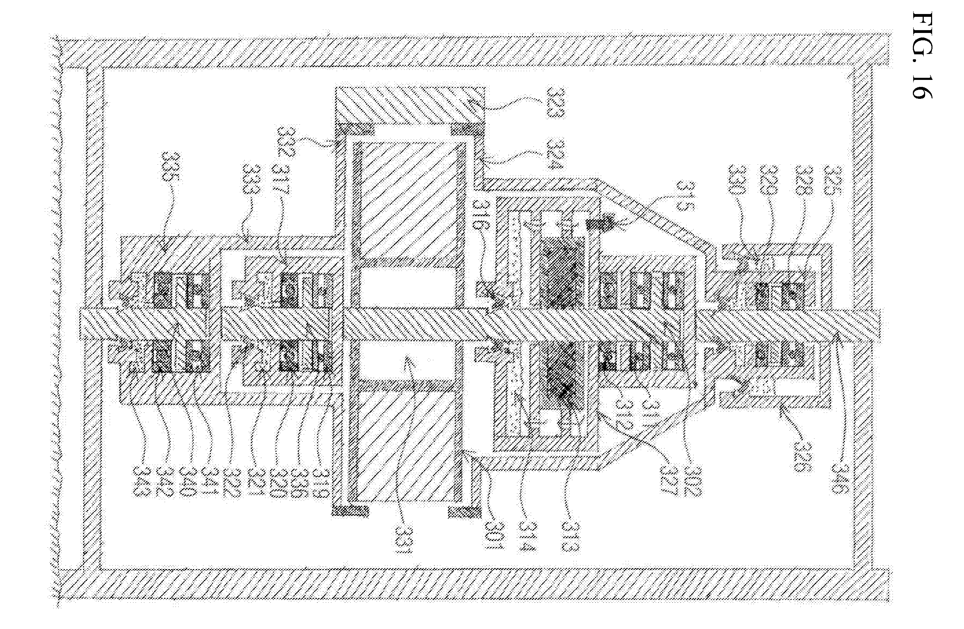

FIG. 16 is a sectional view illustrating a third embodiment of the tidal current power generator in accordance with the third aspect of the present invention; and

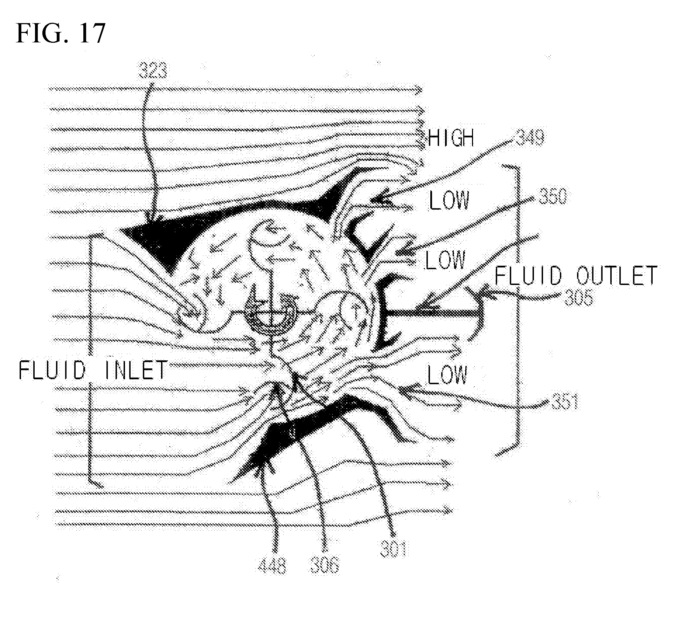

FIG. 17 is a sectional view illustrating induction casings, a plurality of venturi tubes, a tail blade, and an impeller-type auxiliary blade, which may be used in the tidal current power generator in accordance with the third aspect of the present invention.

### DETAILED DESCRIPTION OF THE INVENTION

### MODE FOR INVENTION

Advantages and features of the present invention, and ways to achieve them will be apparent from embodiments of the present invention described with reference to the accompanying drawings in the following. However, the scope of the present invention is not limited to such embodiments and the present invention may be realized in various forms. The embodiments disclosed in the specification are merely examples provided to disclose the present invention and assist those skilled in the art to completely understand the present invention. The present invention is defined only by the scope of the appended claims. The same reference numerals are used to designate the same elements throughout the specification and drawings. Also, the term "and/or" includes any and all combinations of one or more of the associated listed items.

It will be understood that, although the terms "first", "second", etc. may be used herein to describe various elements, components, and/or sections, these elements, components, and/or sections should not be limited by these terms. These terms are only used to distinguish one element, component, or section from another element, component, or section. Thus, of course, a "first" element, component, or section discussed below could also be termed a "second" element, component, or section within the teachings of the present invention.

The terminology used herein is for the purpose of describing particular embodiments only and is not intended to be limiting of the invention. As used herein, the singular forms are intended to include the plural forms as well, unless the context clearly indicates otherwise. It will be further understood that the terms "comprises" and/or "comprising," when used in this specification, specify the presence of stated elements, components, steps, and/or operations, but do not preclude the presence or addition of one or more other elements, components, steps, and/or operations.

Unless otherwise defined, all terms (including technical and scientific terms) used herein have the same meaning as commonly understood by one of ordinary skill in the art to which this invention belongs. It will be further understood that terms defined in commonly used dictionaries should not be interpreted in an idealized or overly formal sense unless expressly so defined herein.

As used herein, the term "sealed chamber" means a space that includes a lower inlet formed in a bottom portion thereof, but is filled with a gas or liquid so as to prevent seawater from flowing therein when vertically submerged into the seawater. Thus, it will be understood that the sealed chamber may be filled with an inert gas, oil, etc. when necessary, as well as compressed air, so long as the generation efficiency of a tidal current power generator is not deteriorated too much, and this also falls within the scope of protection of the present invention.

Unless specially stated otherwise in the specification, technical features used in a wind power generator may be used as technical features of a tidal current power generator, which are not described herein. In particular, it should be noted that a tidal current power generator as claimed herein may generate electricity not only by ocean currents or the running water of rivers and streams, but also by wind forces, and this also falls within the scope of protection of the present invention.

Hereinafter, a tidal current power generator according to a first aspect of the present invention will be described with reference to FIG. 1 to FIG. 7.

FIG. 1 is a perspective view illustrating the overall structure of a tidal current power generator according to a first aspect of the present invention.

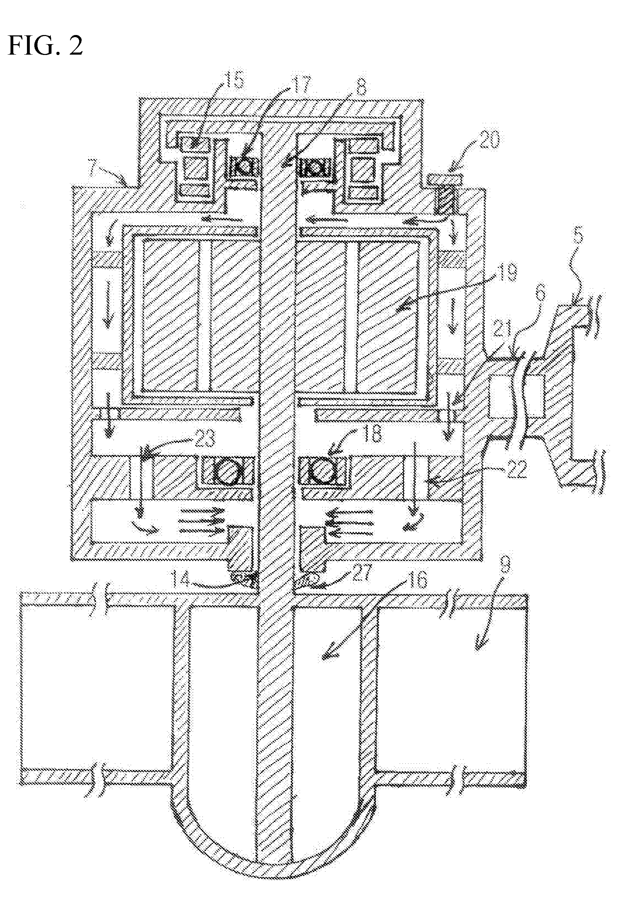

Referring to FIG. 1, the tidal current power generator according to the first aspect of the present invention may include a generator column, an impeller-type rotating blade 9, a first sealed chamber 7, and a buoyancy chamber 11 (also see "16" of FIG. 2). In FIG. 1, for example, two first sealed chambers 7 are illustrated.

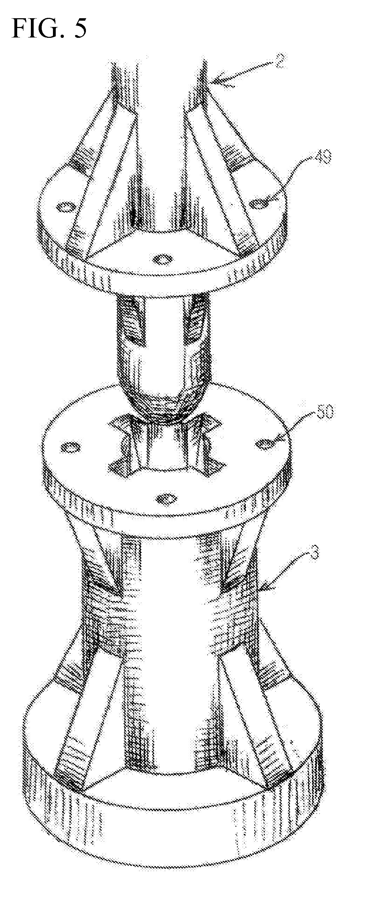

The generator column may be divided into two or more stages by including a plurality of sub-columns 1, 2, 3 that are connected to each other by a joint with a concave-convex structure. As shown in FIG. 1, for example, the generator column may include three sub-columns, that is, a generator top column 1, a generator middle column 2, and a generator bottom column 3, and the respective sub-columns may be connected by joints 4-1, 4-2. Here, the joints 4-1, 4-2 may be formed with a concave-convex structure and thus be easy to assemble. The joints 4-1, 4-2 will be described in detail below with reference to FIG. 5.

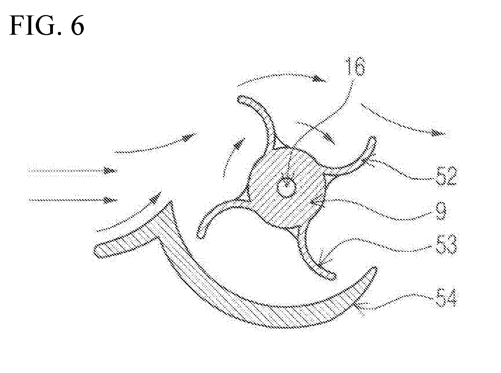

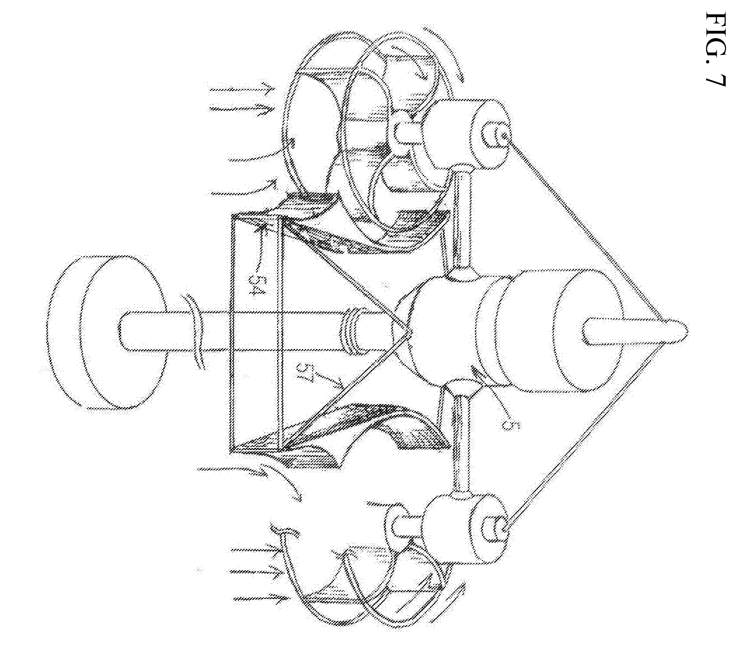

The impeller-type rotating blade 9 may be provided on the upper portion of the generator column, and a wave-shaped induction casing (see "54" of FIGS. 6 and 7) may be mounted to the impeller-type rotating blade 9.

A rotating shaft 8 of the impeller-type rotating blade 9 may be connected to each first sealed chamber 7. To this end, each first sealed chamber 7 may have a bottom portion formed with a lower inlet into which the rotating shaft 8 of the impeller-type rotating blade 9 is vertically introduced. A vertical shaft generator (see "19" of FIG. 2) for producing electrical energy and units necessary for power generation may be disposed inside of the sealed chamber 7. The first sealed chamber 7 will be described in detail below with reference to FIG. 2.

The buoyancy chamber 11 (also see "16" of FIG. 2) may include a buoyancy chamber 11 coupled to the upper portion of the generator column and a buoyancy chamber (see "16" of FIG. 2) coupled to the lower portion of the rotating shaft 8 of the impeller-type rotating blade 9. For example, the buoyancy chamber 11 (also see "16" of FIG. 2) may be a vacuum tank or a tank filled with a light gas. The buoyancy chamber 11 can reduce the weight load exerted to the generator top column 1, and the buoyancy chamber (see "16" of FIG. 2) can reduce the weight load exerted to the rotating shaft 8 of the impeller-type rotating blade 9. In this way, it is possible to reduce the load friction forces exerted to bearings and the like used in rotating components within the tidal current power generator, which can improve durability and increase operational efficiency. Also, when repair and maintenance is required, the buoyancy chamber 11 (also see "16" of FIG. 2) provided in the tidal current power generator allows parts, which are to be repaired and maintained, to be more easily lifted up above the surface of the water.

The tidal current power generator may further include a rudder 10 and a generator top column direction control chamber 5.

The rudder 10 is provided on the upper portion of the generator column, and can control the positions of the impeller-type rotating blade 9 and the vertical shaft generator according to changes in tidal current direction. For example, the rudder 10 can control the position of the impeller type rotating blade 9 connected to the generator top column direction control chamber 5 and the position of vertical shaft generator provided within the generator top column direction control chamber 5 by determining the direction of the generator top column direction control chamber 5.

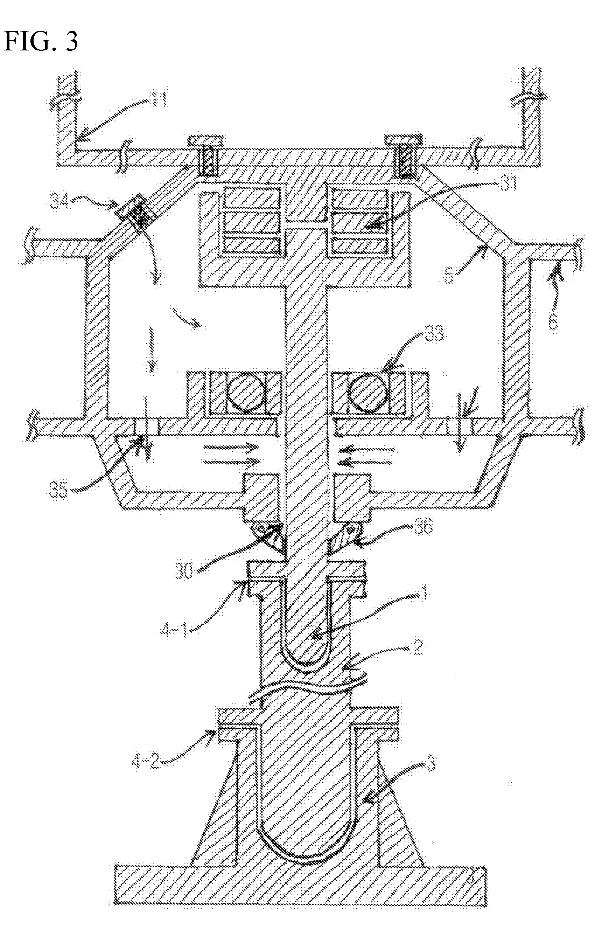

The generator top column direction control chamber 5 is provided on the generator top column 1, and can control the direction of the generator top column 1 according to changes in tidal current direction. Also, the generator top column direction control chamber 5 may constitute a second sealed chamber in which bearings and auxiliary units for assisting the rotation of the upper portion of the generator column are disposed. This will be described in detail below with reference to FIG. 3.

However, the generator top column direction control chamber 5 may not be used in river and stream regions or ocean current regions where the flow direction of tidal currents is not readily changed.

A cross-shaped column 6 may be in the form of four columns extending crosswise from the generator top column direction control chamber 5. The cross-shaped column 6 connects the generator top column direction control chamber 5 to components such as the first sealed chamber 7. In FIG. 1, for example, the one sealed chamber 7 with the vertical shaft generator disposed therein is coupled to each of the right and left columns of the cross-shaped column 6. Also, the cross-shaped column may serve to reinforce the bearing capacities of structures connected thereto. This cross-shaped column 6 may be formed by a hollow column, resulting in an increase in structural strength, and may serve as a buoyancy chamber, resulting in a decrease in the weight load exerted to the cross-shaped column 6.

FIG. 2 is a sectional view illustrating the internal structure of the impeller-type rotating blade and the first sealed chamber.

Referring to FIG. 2, the rotating shaft 8 of the impeller-type rotating blade 9 may be vertically introduced into the first sealed chamber 7 from the lower inlet 14 of the first sealed chamber 7, and be connected to the first sealed chamber by a thrust bearing 15. The buoyancy chamber 16 may be coupled to the lower portion of the rotating shaft 8 of the impeller-type rotating blade 9 to reduce the load friction force exerted to the thrust bearing 15. In order to maintain the rotational force of the rotating shaft 8 of the impeller-type rotating blade 9, rotating shaft bearings 17, 18 may be provided. The vertical shaft generator 19 connected to the rotating shaft 8 of the impeller-type rotating blade 9 can produce electrical energy by using the rotational motion of the rotating shaft 8 of the impeller-type rotating blade 9. The impeller-type rotating blade 9 may be coupled to the buoyancy chamber 16 disposed at the lower portion of the rotating shaft 8 of the impeller-type rotating blade 9.

Compressed air is injected into the first sealed chamber 7 through a compressed air injection hole 20, and the injected compressed air can reach the lower inlet 14 of the first sealed chamber 7 via air flow holes 21, 22, 23. In this way, the compressed air can reduce or prevent seawater from flowing into the first sealed chamber 7.

A rubber plate valve 27, which is provided at the lower inlet 14 of the first sealed chamber 7, can reduce or prevent seawater moisture or sea creatures from entering into the first sealed chamber 7.

In this way, since the vertical shaft generator 19 and other units necessary for power generation are disposed within the first sealed chamber 7, they can be separated from seawater and consequently be prevented from being corroded by the seawater.

In addition, since the bearings and auxiliary units for assisting the rotation of the upper portion of the generator column are disposed within the first sealed chamber 7, they can be separated from seawater and consequently be prevented from being corroded by the seawater. Accordingly, the efficiency of the bearings can also be increased because lubricating oil does not flow out of the bearings and the bearings are not corroded by seawater. Also, since lubricating oil is not washed out of the bearings, there is no need to continuously supply lubricating oil to the bearings, and lubricating oil used in the bearings can be prevented from flowing into and contaminating the sea.

FIG. 3 is a sectional view illustrating the internal structure of the generator top column direction control chamber of FIG. 1.

Referring to FIG. 3, the generator top column 1 may be vertically introduced into the generator top column direction control chamber 5 from the lower inlet 30 of the generator top column direction control chamber 5, and be connected to the generator top column direction control chamber 5 by a thrust bearing 31. The buoyancy chamber 11 may be coupled onto the generator top column direction control chamber 5 to reduce the load friction force exerted to the thrust bearing 31. The rotation of the generator top column direction control chamber 5 may be assisted by the thrust bearing 31 and a rotating shaft bearing 33.

Compressed air is injected into the generator top column direction control chamber 5 through a compressed air injection hole 34 provided in an upper portion of the generator top column direction control chamber 5, and the injected compressed air can reach the lower inlet 30 of the generator top column direction control chamber 5 through air flow holes 35. In this way, the generator top column direction control chamber 5 constitutes a second sealed chamber, and the compressed air injected therein can reduce or prevent seawater from flowing into the generator top column direction control chamber 5.

A rubber plate valve 36, which is provided at the lower inlet 30 of the generator top column direction control chamber 5, can reduce or prevent seawater moisture or sea creatures from entering into the generator top column direction control chamber 5.

In this way, since the bearings and auxiliary units for assisting the rotation of the generator top column direction control chamber 5 are disposed within the generator top column direction control chamber 5 constituting the second sealed chamber, they can be separated from seawater and consequently be prevented from being corroded by the seawater. Accordingly, the efficiency of the bearings can also be increased because lubricating oil does not flow out of the bearings and the bearings are not corroded by seawater. Also, since lubricating oil is not washed out of the bearings, there is no need to continuously supply lubricating oil to the bearings, and lubricating oil used in the bearings can be prevented from flowing into and contaminating the sea.

As mentioned above, the generator column may include three sub-columns. As shown in the drawing, the generator top column 1 and the generator middle column 2 may be connected by the joint 4-1, and the generator middle column 2 and the generator bottom column 3 may be connected by the joint 4-2. In order to facilitate repair and maintenance, each of the joints 4-1, 4-2 may be formed with a concave-convex structure.

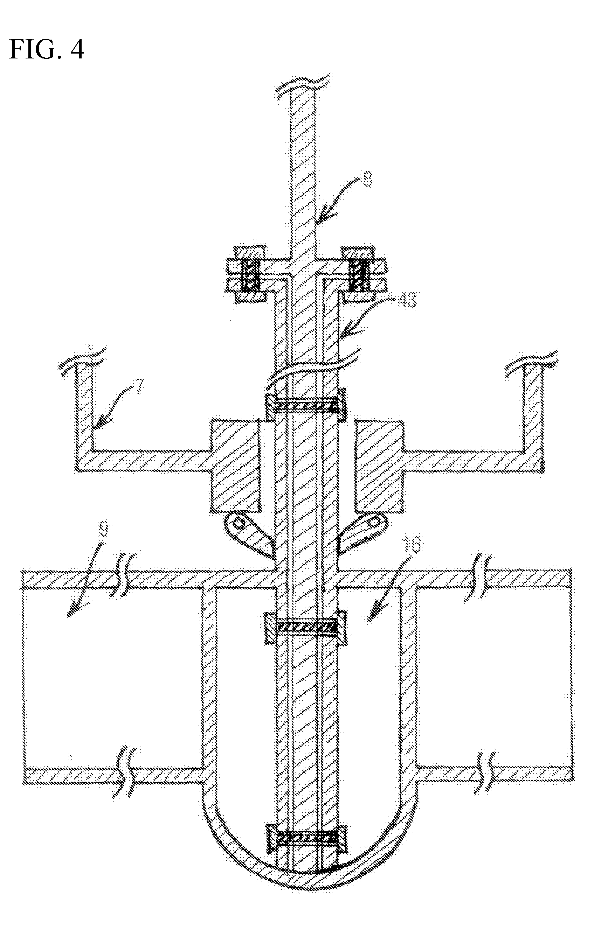

FIG. 4 is a sectional view illustrating the rotating shaft of the impeller-type rotating blade.

Referring to FIG. 4, a rotating shaft shell 43 for reducing or preventing the rotating shaft 8 of the impeller-type rotating blade 9 from being corroded may be coupled onto the rotating shaft 8 of the impeller-type rotating blade 9. Here, the rotating shaft 8 of the impeller-type rotating blade 9 may be mainly made of metal, but the rotating shaft shell 43 may be made of a material that is not readily corroded by seawater, such as carbon fiber or plastic. In this way, the rotating shaft 8 of the impeller-type rotating blade 9, which may be made of metal, can be prevented from coming into contact with seawater to thereby be corroded by the seawater, or can be corroded less by seawater.

FIG. 5 is a perspective view for explaining that the generator column has a concave-convex connection structure.

As described above, the generator column may be divided into two or more stages by including a plurality of sub-columns (see "1, 2, 3" of FIG. 1) that are connected by joints with a concave-convex structure.

This is particularly advantageous when the water in which the tidal current power generator is installed is not shallow.

Referring to FIG. 5, as an example of the sub-columns connected by a concave-convex connection structure, the generator middle column 2 and the generator bottom column 3 are connected by a concave-convex connection structure.

By this concave-convex connection structure, the sub-columns cannot be inclined with respect to or separate from each other unless a vertical force acts on the sub-columns. However, except upwelling currents, no force vertically acting on the generator column exists in the sea.

Therefore, if the generator middle column 2 and the generator bottom column 3 are tied with ropes, plastic bands, or the like through holes 49, 50 formed in a portion where the generator middle column 2 and the generator bottom column 3 are connected by the concave-convex connection structure, then the generator column can be easily divided into two or more sub-columns by untying the ropes or plastic bands and vertically pulling out the sub-columns when repair and maintenance is required. Here, the ropes or plastic bands may be made of a material that is not readily corroded by seawater and yet is easy to untie or cut. In this way, as compared to using readily-corrodible bolts and nuts to connect the sub-columns, it is possible to easily divide the generator column into two or more sub-columns. The main force of tidal currents only acts in a direction causing the generator column to be bent, and thus this natural force of tidal currents will not act as a force to cut the ropes or plastic bands.

Since the generator column can be easily divided into two or more sub-columns in this way, when repair and maintenance is required, parts to be repaired and maintained can be easily lifted up above the surface of the water.

FIG. 6 is a sectional view illustrating the induction casing, and FIG. 7 is a perspective view illustrating the tidal current power generator of FIG. 1, which is provided with the induction casing of FIG. 1.

Referring to FIGS. 6 and 7, the wave-shaped induction casing 54 may be mounted to the impeller-type rotating blade 9. This induction casing 54 may serve to increase the rotational force of the impeller-type rotating blade 9.

In general, with the impeller-type rotating blade 9, a rotating vane 52 located in the direction of the rotation of the impeller-type rotating blade 9 may increase the rotational force of the rotating shaft 8 of the impeller-type rotating blade 9, and a rotating vane 53 located opposite to the direction of the rotation of the impeller-type rotating blade 9 may decrease the rotational force of the rotating shaft 8 of the impeller-type rotating blade 9.

Therefore, when the induction casing 54 is disposed on the side of the rotating vane 53 located opposite to the direction of the rotation of the impeller-type rotating blade 9, as shown in FIG. 6, the greater rotational force of the rotating shaft 8 of the impeller-type rotating blade 9 can be obtained.

As shown in FIG. 7, the induction casing 54 described with reference to FIG. 6 may be provided in the tidal current power generator in such a manner that, for example, it is coupled to the generator top column direction control chamber 5 by a support structure 57.

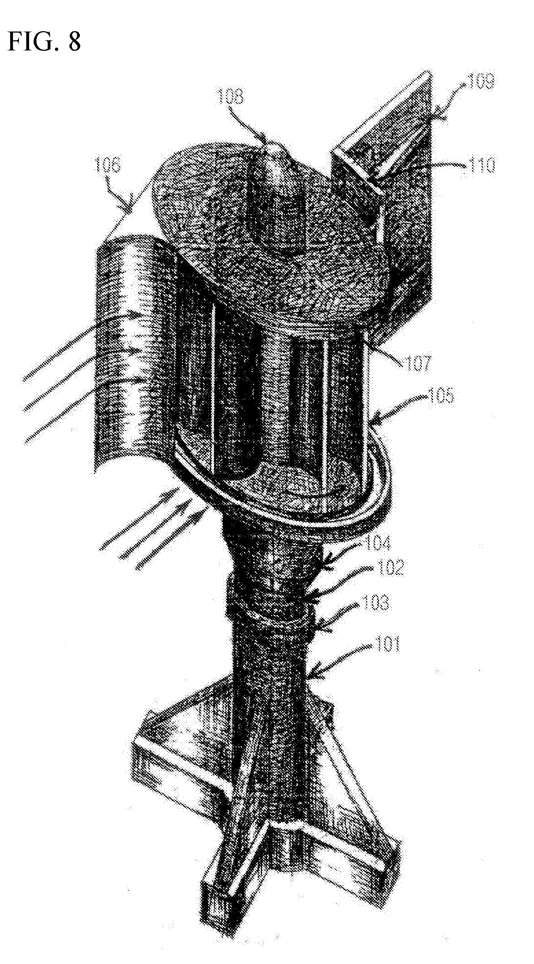

Hereinafter, a tidal current power generator according to a second aspect of the present invention will be described with reference to FIGS. 8 to 12.

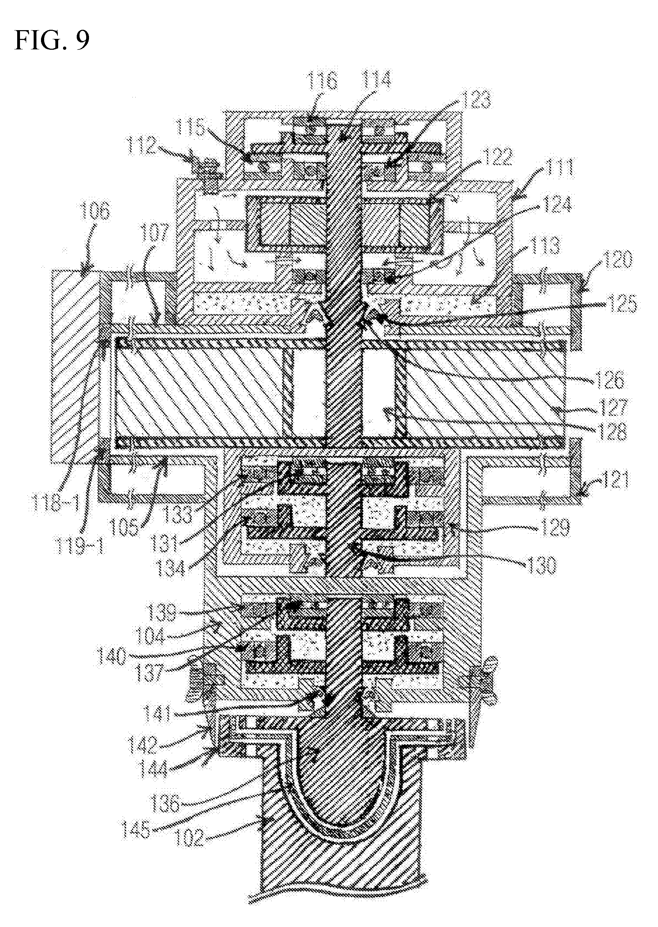

FIG. 8 is a perspective view illustrating the overall structure of a tidal current power generator according to a second aspect of the present invention. FIG. 9 is a sectional view illustrating the internal structure of the tidal current power generator of FIG. 8.

Referring to FIGS. 8 and 9, the tidal current power generator may include a sealed chamber 111, an impeller-type rotating blade 127, a vertical shaft generator 122, a rotating shaft fixing chamber 129, a fixing chamber support shaft 130, a direction control chamber 104, and a direction control chamber support shaft 136.

The sealed chamber 111 may have a bottom portion formed with a lower inlet. Compressed air is injected into the sealed chamber 111 through a compressed air injection hole 112, and the injected compressed air can reach a lower portion of the sealed chamber 111 via air flow holes.

The sealed chamber 111 may have an anticorrosive storage chamber, in which an anticorrosive lighter than seawater is stored, in its lower portion. For example, the anticorrosive may be oil, grease, or the like which is lighter than seawater. This anticorrosive can reduce or prevent moisture mixed with seawater salts from flowing into the sealed chamber 111 and being accumulated to corrode metallic parts over a long-term use, without impeding the rotational force of the rotating shaft 114 of the impeller-type rotating blade 127. The anticorrosive can also reduce or prevent sea creatures from entering into the sealed chamber 111.

The impeller-type rotating blade 127 may have a rotating shaft 114. The rotating shaft 114 of the impeller-type rotating blade 127 may be vertically introduced into the sealed chamber 111 from the lower inlet of the sealed chamber 111.

Thrust bearings 115, 116 may be disposed in an upper portion of the rotating shaft 114 of the impeller-type rotating blade 127. The thrust bearings 115, 116 may vertically connect the rotating shaft 114 of the impeller-type rotating blade 127 and the sealed chamber 111 while maintaining the rotational relation between the rotating shaft 114 of the impeller-type rotating blade 127 and the sealed chamber 111. Also, rotating shaft bearings 123, 124 may be disposed in spaces between the rotating shaft 114 of the impeller-type rotating blade 127 and the sealed chamber 111. The rotating shaft bearings 123, 124 can prevent right and left shaking while maintaining the rotational relation between the rotating shaft 114 of the impeller-type rotating blade 127 and the sealed chamber 111. Also, the rotating shaft bearings 123, 124 can also function as a connection structure of the sealed chamber 111 and the rotating shaft 114 of the impeller-type rotating blade 127.

A recess 126 may be formed between the lower inlet of the sealed chamber 111 and a portion of the rotating shaft 114 of the impeller-type rotating blade 127, which is adjacent to the lower inlet of the sealed chamber 111, and a concave-shaped ring 125 may be inserted into the recess 125. The concave-shaped ring 125 may be made of an elastic material, such as rubber or plastic, can reduce or prevent the anticorrosive lighter than seawater from leaking out of the anticorrosive storage chamber when compressed air is injected into the sealed chamber 111, and can reduce or prevent the anticorrosive from coming into contact with seawater.

The vertical shaft generator 122 may be disposed about the rotating shaft 114 of the impeller-type rotating blade 127.

The rotating shaft fixing chamber 129 may be coupled to the rotating shaft 114 of the impeller-type rotating blade 127 to prevent the rotating shaft 114 of the impeller-type rotating blade 127 from vibrating and twisting while maintaining the rotational force of the rotating shaft 114 of the impeller-type rotating blade 127. The rotating shaft fixing chamber 129 may be a sealed chamber similar to the sealed chamber 111. The rotating shaft fixing chamber 129 may have a bottom portion formed with a lower inlet. The rotating shaft fixing chamber 129 may have an anticorrosive storage chamber, in which an anticorrosive lighter than seawater is stored, in its lower portion. For example, the anticorrosive may be oil, grease, or the like which is lighter than seawater. This anticorrosive can reduce or prevent moisture mixed with seawater salts from flowing into the rotating shaft fixing chamber 129 and being accumulated to corrode metallic parts over a long-term use. The anticorrosive can also reduce or prevent sea creatures from entering into the rotating shaft fixing chamber 129.

The relative position between the rotating shaft fixing chamber 129 and the vertical shaft generator 122 may vary according to embodiments of the present invention. More specially, as shown in FIGS. 8 and 9, the rotating shaft fixing chamber 129 may be coupled to a lower portion of the rotating shaft 114 of the impeller-type rotating blade 127 to prevent the rotating shaft 114 of the impeller-type rotating blade 127 from vibrating and twisting while maintaining the rotational force of the lower portion of the rotating shaft 114 of the impeller-type rotating blade 127, and the vertical shaft generator 122 may be mounted to an upper portion of the rotating shaft 114 of the impeller-type rotating blade 127. Here, the vertical shaft generator 122 may be a rotating-field generator.

In contrast to the drawing, the rotating shaft fixing chamber 129 may be coupled to an upper portion of the rotating shaft 114 of the impeller-type rotating blade 127 to prevent the rotating shaft 114 of the impeller-type rotating blade 127 from vibrating and twisting while maintaining the rotational force of the upper portion of the rotating shaft 114 of the impeller-type rotating blade 127, and the vertical shaft generator 122 may be mounted to a lower portion of the rotating shaft 114 of the impeller-type rotating blade 127. Here, the vertical shaft generator 122 may be a rotating-armature generator.

The fixing chamber support shaft 130 may be vertically introduced into the rotating shaft fixing chamber 129 from the lower inlet of the rotating shaft fixing chamber 129.

Thrust bearings 131 may be disposed in an upper portion of the fixing chamber support shaft 130. The thrust bearings 131 may vertically connect the fixing chamber support shaft 130 and the rotating shaft fixing chamber 129 while maintaining the rotational relation between the fixing chamber support shaft 130 and the rotating shaft fixing chamber 129. Also, rotating shaft bearings 133, 134 may be disposed in spaces between the fixing chamber support shaft 130 and the rotating shaft fixing chamber 129. The rotating shaft bearings 133, 134 can prevent right and left shaking while maintaining the rotational relation between fixing chamber support shaft 130 and the rotating shaft fixing chamber 129. Also, the rotating shaft bearings 133, 134 can also function as a connection structure of the rotating shaft fixing chamber 129 and the fixing chamber support shaft 130.

A recess may be formed between the lower inlet of the rotating shaft fixing chamber 129 and a portion of the fixing chamber support shaft 130, which is adjacent to the lower inlet of the rotating shaft fixing chamber 129, and a concave-shaped ring may be inserted into the recess. The concave-shaped ring may be made of an elastic material, such as rubber or plastic, can reduce or prevent the anticorrosive lighter than seawater from leaking out of the anticorrosive storage chamber when compressed air is injected into the rotating shaft fixing chamber 129, and can reduce or prevent the anticorrosive from coming into contact with seawater.

By the rotating shaft fixing chamber 129 and the fixing chamber support shaft 130, both the lower and upper ends of the rotating shaft 114 of the impeller-type rotating blade 127 can be fixed while the rotational force of the rotating shaft 114 of the impeller-type rotating blade 127 is maintained. Thus, even when the impeller-type rotating blade 127 has an enlarged width, it is possible to reduce vibration and twisting of the lower portion of the rotating shaft 114 of the impeller-type rotating blade 127. In this way, the width of the impeller-type rotating blade 127 can be further enlarged, which results in an increase of the amount of electricity generation.

Also, by the rotating shaft fixing chamber 129 and the fixing chamber support shaft 130, the lower end of one rotating shaft of the impeller-type rotating blade can be fixed on one generator column, which makes it possible to create a tidal current power generator having a vertical shaft generator with the simple overall structure in which one impeller-type rotating blade is disposed on one generator column. If the overall structure is simplified in this way, then the possibility of using the tidal current power generator even in an unclean seabed or in a stream or river into which waste and scrubs flow during a flood can be increased because the possibility that fishing nets and ropes are caught on the tidal current power generator is decreased.

The direction control chamber 104 may be disposed above the generator top column 102 to change the position of the induction casing 106. The direction control chamber 104 may be disposed below the rotating shaft fixing chamber 129 and be connected to the lower end of the fixing chamber support shaft 130 at its upper end. The direction control chamber 104 may be a sealed chamber similar to the sealed chamber 111. The direction control chamber 104 may have a bottom portion formed with a lower inlet. The direction control chamber 104 may have an anticorrosive storage chamber, in which an anticorrosive lighter than seawater is stored, in its lower portion. For example, the anticorrosive may be oil, grease, or the like lighter than seawater. This anticorrosive can reduce or prevent moisture mixed with seawater salt from flowing into the direction control chamber 104 and being accumulated to corrode metallic parts over a long-term use. The anticorrosive can also reduce or prevent sea creatures from entering into the direction control chamber 104.

A debris guard 142 may be provided at the outer lower end of the direction control chamber 104. The debris guard 142 can reduce or prevent fishing nets or ropes from being caught in the gap between the direction control chamber 104 and the upper end of the generator top column 102.

The direction control chamber support shaft 136 may be vertically introduced into the direction control chamber 104 from the lower inlet of the direction control chamber 104. The direction control chamber support shaft 136 may be mounted to one generator column. The direction control chamber support shaft 136 may be coupled to the upper end of the generator column by a concave-convex connection structure. For example, as shown in FIG. 9, the lower end of the direction control chamber support shaft 136 may be coupled to the upper end of the generator top column 102 by a concave-convex connection structure so as to facilitate coupling and decoupling therebetween.

Here, an upwardly angled, L-shaped rim 144 may be provided on the circumference of the upper end of the generator column. Also, an anticorrosive pocket 145 having a shape corresponding to the concave-convex connection structure may be inserted between the lower end of the direction control chamber support shaft 136 and the upper end of the generator top column 102. The anticorrosive pocket 145 may be made of a fabric, a non-woven fabric, or any other material infiltrated with an anticorrosive heavier than seawater. When the direction control chamber support shaft 136 and the generator top column 102 are coupled to each other, the anticorrosive pocket 145 is first inserted into the generator top column 102, and then the direction control chamber support shaft 136 is inserted into the generator top column 102. In this way, the anticorrosive heavier than seawater cannot leak out of the connection portion of the generator top column 102 and the direction control chamber support shaft 136, and at the same time, seawater cannot flow into the connection portion. In other words, the L-shaped rim 144 can function as a prevention guard for preventing foreign inflows from flowing into the connection portion between the generator top column 102 and the direction control chamber support shaft 136 and preventing oil from flowing out of the connection portion. As a result, it is possible to reduce or prevent difficulties in decoupling the concave-convex connection structure after a long-term use from being caused by corrosion effects due to seawater flowing into the connection portions between the generator sub-columns. Therefore, when repair and maintenance is required, the generator top column 102 and the direction control chamber support shaft 136 can be easily decoupled.

Thrust bearings 137 may be disposed in an upper portion of the direction control chamber support shaft 136. The thrust bearings 137 may vertically connect the direction control chamber support shaft 136 and the direction control chamber 104 while maintaining the rotational relation between the direction control chamber support shaft 136 and the direction control chamber 104. Also, rotating shaft bearings 139, 140 may be disposed in spaces between the direction control chamber support shaft 136 and the direction control chamber 104. The rotating shaft bearings 139, 140 can prevent right and left shaking while maintaining the rotational relation between the direction control chamber support shaft 136 and the direction control chamber 104. Also, the rotating shaft bearings 139, 140 can also function as a connection structure of the direction control chamber support shaft 136 and the direction control chamber 104.

A recess may be formed between the lower inlet of the direction control chamber 104 and a portion of the direction control chamber support shaft 136, which is adjacent to the lower inlet of the direction control chamber 104, and a concave-shaped ring 141 may be inserted into the recess. The concave-shaped ring 141 may be made of an elastic material, such as rubber or plastic, can reduce or prevent the anticorrosive lighter than seawater from leaking out of the anticorrosive storage chamber when compressed air is injected into the direction control chamber 104, and can reduce or prevent the anticorrosive from coming into contact with seawater.

The tidal current power generator may further include a buoyancy chamber 128 between the impeller-type rotating blade 127 and its rotating shaft 114. As described above, when one vertical shaft generator 122 is disposed on one generator column, a large load may be exerted to the thrust bearings 115, 116; 131; 137, but the buoyancy chamber 128 can reduce the load exerted to the thrust bearings 115,116;131;137.

The tidal current power generator may further include disks 105, 107, an induction casing 106, a direction control blade 109, debris guards 118-1, 119-1, an induction casing support structure, and a direction control auxiliary blade 110.

The disks 105, 107 are rotatable centered on the rotating shaft 114 of the impeller-type rotating blade 127. The disks 105, 107 may include an upper disk 107 disposed below a power generation chamber 108 and above the impeller-type rotating blade 127, and a lower disk 105 disposed below impeller-type rotating blade 127 and coupled to the side of the direction control chamber 104. The upper disk 107 and the lower disks 105 may be connected and fixed to each other by the induction casing 106, the rotating shaft 114 of the impeller-type rotating blade 127, and the direction control blade 109.

The induction casing 106 may have a triangular shape and be coupled to one of the disks 105, 107.

The direction control blade 109 may be coupled to the other of the disks 105, 107.

The debris guards 118-1, 119-1 may be provided on the circumferences of the disks 105, 107. The debris guards 118-1, 119-1 can prevent foreign materials, such as ropes, from being caught in the gaps between the impeller-type rotating blade 127 and the disks 105, 107.

The induction casing support structure is a structure for supporting the induction casing 106, and may be connected to the direction control blade 109. Since the induction casing support structure is not fixed to a column located thereabout, the induction casing 106 can be easily moved to an appropriate position according to changes in tidal current direction.

The direction control blade 110 may be provided on the upper disk 107 to assist in controlling the position of the induction casing 106.

According to this arrangement, it is possible to easily control the position of the induction casing 106 according to changes in tidal current direction - independently of the fast rotation of the impeller-type rotating blade 127 - while fixing the lower end of the rotating shaft 114 of the impeller-type rotating blade 127 onto the upper end of one generator column 101, 102. In other words, while the induction casing 106 is also provided on one generator column 101, 102, the induction casing 106 can be appropriately rotated according to the direction of tidal currents by the direction control blade 109 and the direction control auxiliary blade 110.

The tidal current power generator may further include buoyancy chambers 120,121 provided on the upper disk 107 and the lower disk 105. As described above, when one vertical shaft generator 122 is disposed on one generator column, a large load may be exerted to the thrust bearings, in particular, the thrust bearings 115, 116 used to bear the rotating shaft 114 of the impeller-type rotating blade 127, thereby hindering the rotation of the rotating shaft 114 of the impeller-type rotating blade 127. The buoyancy chambers 120, 121 can reduce or prevent the rotating shaft 114 of the impeller-type rotating blade 127 from being hindered in its rotation.

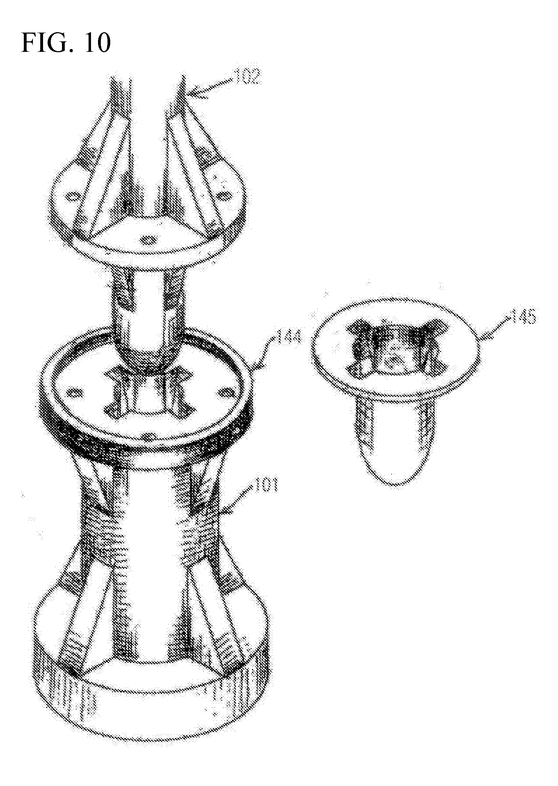

FIG. 10 is a detailed view illustrating of the portion where the generator top column and the generator bottom column are connected.

As shown in FIG. 8, the generator column of the tidal current power generator may be divided into two or more stages by including a plurality of sub-columns 101, 102 that are connected to each other by a joint with a concave-convex structure. For example, the generator column may include two sub-columns, that is, a generator top column 102 and a generator bottom column 101, and the sub-columns may be connected by a joint 103.

The connection portion of the generator top column 102 and the generator bottom column 101 will be described with reference to FIG. 10. Referring to FIG. 10, the generator top column 102 and the generator bottom column 101 are connected by a concave-convex connection structure, which is intended to facilitate coupling and decoupling therebetween.

Here, an upwardly angled, L-shaped rim 144 may be provided on the circumference of the upper end of the generator bottom column 101. Also, an anticorrosive pocket 145 having a shape corresponding to the concave-convex connection structure may be inserted between the upper end of the generator bottom column 101 and the lower end of the generator top column 102. The anticorrosive pocket 145 may be made of a fabric, a non-woven fabric, or any other material infiltrated with an anticorrosive heavier than seawater. When the generator top column 102 and the generator bottom column 101 are coupled to each other, the anticorrosive pocket 145 is first inserted into the generator bottom column 101, and then the generator top column 102 is inserted into the generator bottom column 101. In this way, the anticorrosive heavier than seawater cannot leak out of the connection portion of the generator top column 102 and the generator bottom column 101, and at the same time, seawater cannot flow into the connection portion. That is, the L-shaped rim 144 can function as a prevention guard for preventing foreign inflows from flowing into the connection portion between the generator top column 102 and the generator bottom column 101 and preventing oil from flowing out of the connection portion. As a result, it is possible to reduce or prevent difficulties in decoupling the concave-convex connection structure after a long-term use from being caused by corrosion effects due to seawater flowing into the connection portions between the generator sub-columns. Therefore, when repair and maintenance is required, the generator top column 102 and the generator bottom column 101 can be easily decoupled.

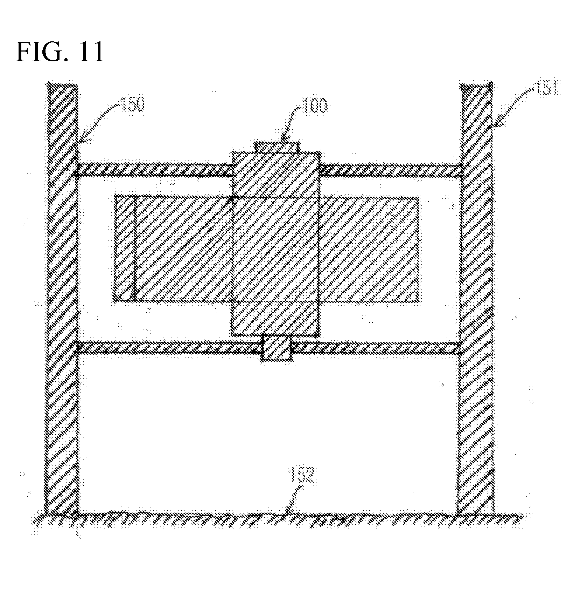

FIG. 11 is a sectional view showing that one vertical shaft generator as described with reference to FIGS. 8 and 9 is provided between two generator columns.

The vertical shaft generator 100 may be provided on one column, but may also be provided between one column 150 and one or more other columns 151 standing by the one column 150, as shown in FIG. 11. In FIG. 11, reference numeral "152" designates the ground.

In the tidal current power generator according to the second aspect of the present invention as described above, not only the upper end of the rotating shaft of the impeller-type rotating blade, but also the lower end of the rotating shaft of the impeller-type rotating blade can be fixed while the rotational force of the rotating shaft of the impeller-type rotating blade is maintained. In particular, by providing one vertical shaft generator 100 between a plurality of columns 150, 151, as shown in FIG. 11, the upper and lower ends of the rotating shaft of the impeller-type rotating blade can be more firmly fixed. Thus, even when the impeller-type rotating blade has an enlarged width, it is possible to reduce vibration and twisting of the lower portion of the rotating shaft of the impeller-type rotating blade. In this way, the width of the impeller-type rotating blade can be further enlarged, which results in an increase of the amount of electricity generation.

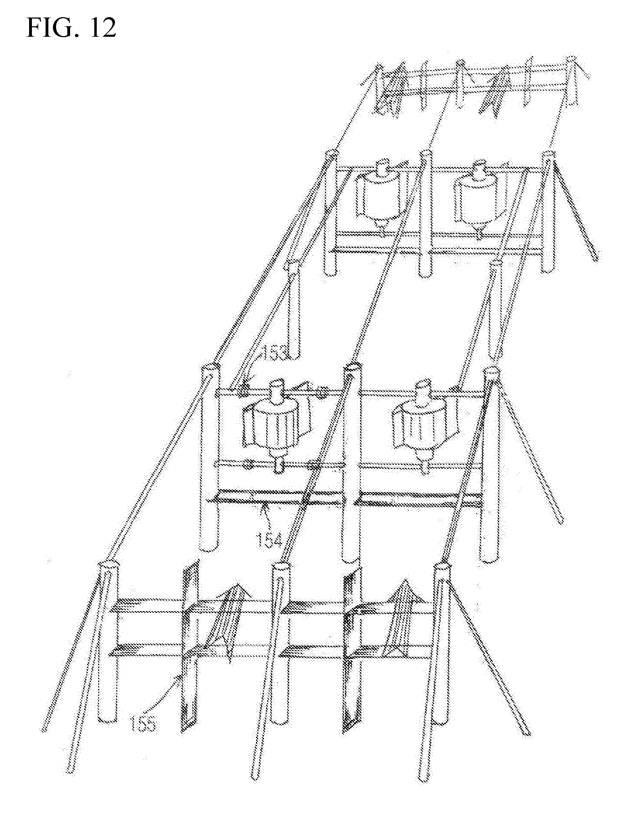

FIG. 12 is a perspective view showing that a plurality of vertical shaft generators are provided between a plurality of columns arranged lengthwise and crosswise.

Referring to FIG. 12, by providing a plurality of vertical shaft generators between a plurality of columns arranged lengthwise and crosswise, the tidal current power generator can be more economical, and the bearing strength of the support structure for the vertical shaft generators can be increased. According to such an increase in bearing strength, two or more vertical shaft generators may also be provided on one generator column. This arrangement may be useful in, for example, a clean seabed or river where there are no fishing nets and ropes or waste hindering the rotation of the impeller-type rotating blade.

In this arrangement, generator detachment joints 153 may be provided to separate any vertical shaft generator from the plurality of columns when repair and maintenance is required.

Also, column support structures 154 may be provided to keep other vertical shaft generators borne when any vertical shaft generator is separated from the plurality of columns.

In addition, catching columns 155 may be provided to prevent fishing nets or ropes from entering into this arrangement, and each catching column 155 may be formed of a wide and thin sheet.

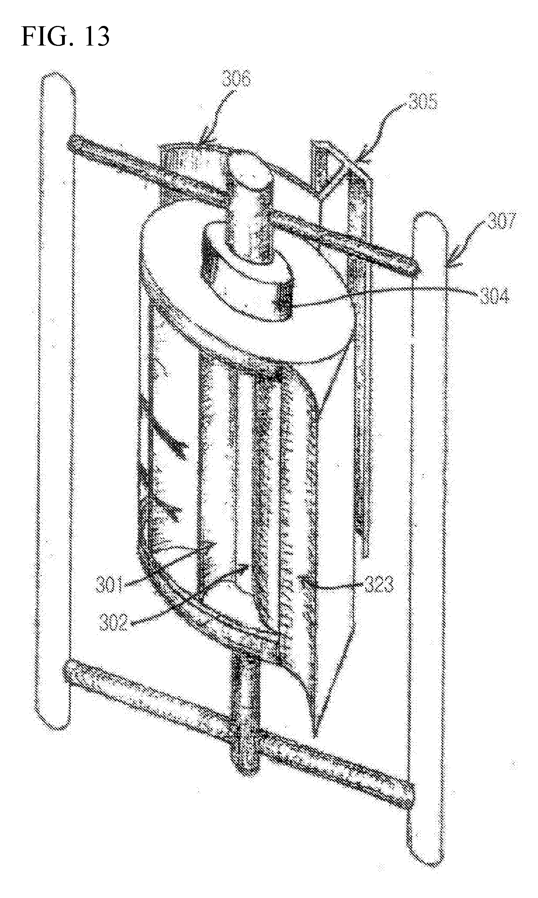

Hereinafter, a tidal current power generator according to a third aspect of the present invention will be described with reference to FIGS. 13 to 17. In describing the tidal current power generator according to the third aspect of the present invention, the same or similar reference numerals will be used to designate components that are substantially the same as or similar to those of the tidal current power generators according to the first and second aspects of the present invention, and a detailed description of such components will be omitted for the sake of convenience.

FIG. 13 is a perspective view illustrating the overall structure of a tidal current power generator according to a third aspect of the present invention.

Referring to FIG. 13, the tidal current power generator according to the third aspect of the present invention may include an impeller-type rotating blade 301, a rotating shaft 302 of the impeller-type rotating blade 301, a sealed chamber 304, an induction casing 323, a tail blade 305, an auxiliary blade 306, and a generator column 307.

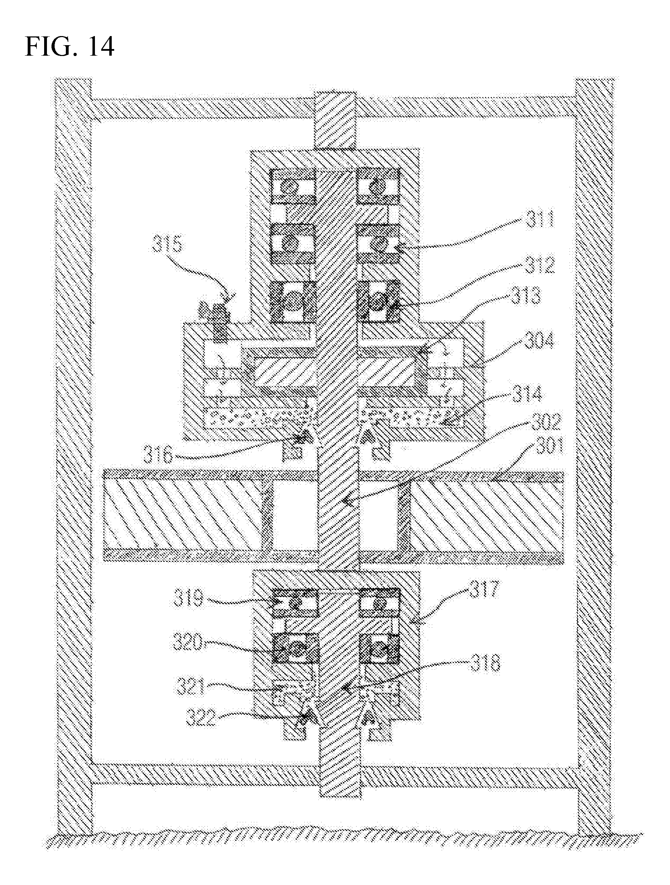

A vertical shaft generator (see "313" of FIG. 14) may be disposed within the sealed chamber 304, the sealed chamber 304 may have a bottom portion formed with a lower inlet, and the rotating shaft 302 of the impeller-type rotating blade 301 may be vertically introduced into the sealed chamber 304 from the lower inlet of the sealed chamber 304. The tail blade 305 can control the position of the induction casing 302 according to changes in the flow direction of tidal currents, and may be T-shaped. The auxiliary blade can assist the tail blade 305 in controlling the position of the induction casing 323.

FIG. 14 is a sectional view illustrating a first embodiment of the tidal current power generator according to the third aspect of the present invention.

Referring to FIG. 14, the tidal current power generator may include a sealed chamber 304, the bottom portion of which is formed with a lower inlet, and a rotating shaft fixing chamber 317, the bottom portion of which is formed with a lower inlet. Here, the rotating shaft fixing chamber 317 may be a sealed chamber similar to the rotating shaft fixing chamber of the tidal current power generator according to the second aspect of the present invention.

The rotating shaft 302 of the impeller-type rotating blade 301 may be vertically introduced into the sealed chamber 304 from the lower inlet of the sealed chamber 304 and be connected to the inside of the sealed chamber 304 via a thrust bearing 311 and a rotating shaft bearing 312. Here, the thrust bearing 311 allows the rotating shaft 302 of the impeller-type rotating blade 301 to be rotated while bearing the rotating shaft 302 of the impeller-type rotating blade 301. Also, the rotating shaft bearing 312 may be used to assist in preventing left and right shaking while maintaining the rotation of the rotating shaft 302 of the impeller-type rotating blade 301. The rotating shaft bearing 312 may be a ball bearing.

An upper portion of the rotating shaft 302 of the impeller-type rotating blade 301 may be connected to an upper portion of the sealed chamber 304 via the thrust bearing 311, and the lower end of the rotating shaft 302 of the impeller-type rotating blade 301 may be fixed to the center of the upper end of the rotating shaft fixing chamber 317 to rotate the rotating shaft 302 of the impeller-type rotating blade 301 while stably securing both the upper and lower portions of the rotating shaft 302 of the impeller-type rotating blade 301.

A vertical shaft generator 313 is disposed within the sealed chamber 304, and the sealed chamber 304 has an anticorrosive storage chamber 314 in its lower portion. For example, the anticorrosive chamber 314 may be filled with oil lighter than seawater. This anticorrosive storage chamber is substantially the same as and performs substantially the same function as that of the tidal current power generator according to the second aspect of the present invention, so a detailed description thereof will be omitted for the sake of convenience.

Similar to the tidal current power generator according to the second aspect of the present invention, the sealed chamber 304 may include a compressed air injection hole 315 and a ring 316. The compressed air injection hole 315 and the ring 316 are also substantially the same as and perform substantially the same functions as those of the tidal current power generator according to the second aspect of the present invention, so a detailed description thereof will be omitted for the sake of convenience.

Since the top portion of the rotating shaft fixing chamber 317 is coupled to the lower end of the rotating shaft 302 of the impeller-type rotating blade 301, the rotating shaft fixing chamber 317 can be rotated with the rotating shaft 302 of the impeller-type rotating blade 301, dissimilar to the sealed chamber 304 disposed in the upper portion of the rotating shaft 302 of the impeller-type rotating blade 301.

The fixing chamber support shaft 318 may be vertically introduced into the rotating shaft fixing chamber 317 from the lower inlet of the rotating shaft fixing chamber 317 and be connected to the inside of the rotating shaft fixing chamber 317 via a thrust bearing 319 and a rotating shaft bearing 320. Here, the thrust bearing 319 allows the fixing chamber support shaft 318 to be rotated while bearing the fixing chamber support shaft 318. Also, the rotating shaft bearing 320 may be used to assist in preventing left and right shaking while maintaining the rotation of the fixing chamber support shaft 318. The rotating shaft bearing 320 may be a ball bearing.

Similar to the sealed chamber 304, the rotating shaft fixing chamber 317 may include an anticorrosive storage chamber 321 and a ring 322. They are substantially the same as and perform substantially the same functions as the anticorrosive storage chamber 314 and the ring 316 provided in the sealed chamber 304, so a detailed description thereof will be omitted for the sake of convenience.

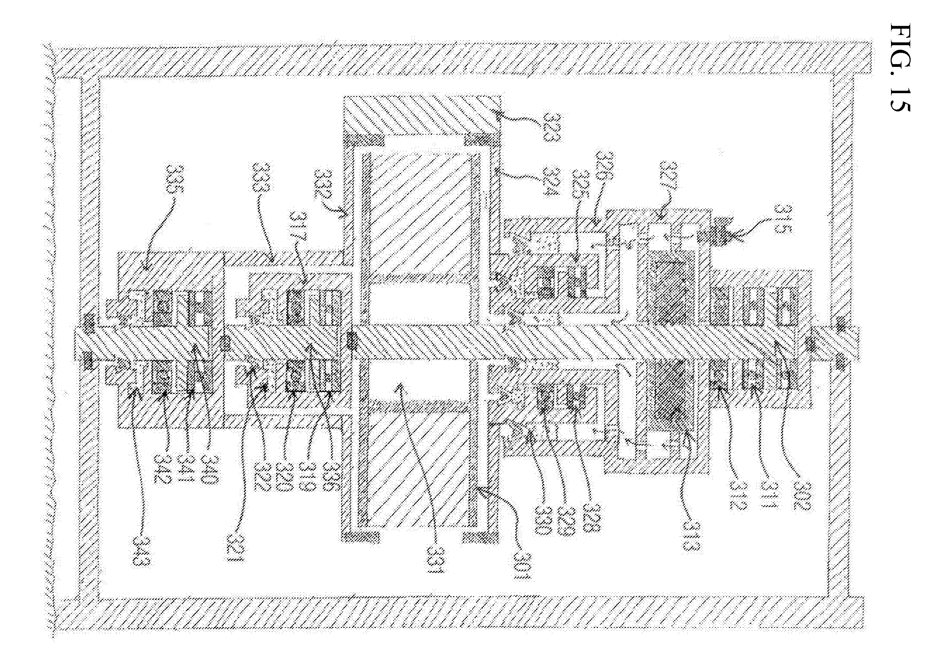

FIG. 15 is a sectional view illustrating a second embodiment of the tidal current power generator according to the third aspect of the present invention.

Referring to FIG. 15, the tidal current power generator illustrated in FIG. 15 further includes an induction casing 323 as compared to the tidal current power generator illustrated in FIG. 14. The induction casing 323 can improve the rotation efficiency of the impeller-type rotating blade 301 with respect to fluid.

In FIG. 15, a first sealed chamber 327 is substantially the same as and performs substantially the same function as the sealed chamber 304 of FIG. 14, so a detailed description thereof will be omitted for the sake of convenience. Similarly, a rotating shaft fixing chamber 317 is substantially the same as and performs substantially the same function as the rotating shaft fixing chamber 317 of FIG. 14, so a detailed description thereof will be omitted for the sake of convenience.

A second sealed chamber 326 may be provided above the induction casing 323. The second sealed chamber 326 may be connected to an upper portion of the induction casing 323 to support the induction casing 323 while maintaining the rotational force of the induction casing 323. A casing rotating chamber 335 may be provided below the induction casing 323. The casing rotating chamber 335 may be connected to a lower portion of the induction casing 323 to support the induction casing 323 while maintaining the rotational force of the induction casing 323. Here, the second sealed chamber is another sealed chamber that may be attached to the underneath of the first sealed chamber 327 within which the vertical shaft generator 313 is disposed. As shown in FIG. 15, for example, the first sealed chamber 327 may be formed in such a manner as to be divided into a wide upper portion and a narrow lower portion, and the second sealed chamber 326 may be disposed about the narrow lower portion of the first sealed chamber 327.

Each of the second sealed chamber 326 and the casing rotating chamber 335 may have a lower inlet formed in its bottom portion. Since the second sealed chamber 326 and the casing rotating chamber 335 may constitute a sealed chamber, similar to the first sealed chamber 327 and the rotating shaft fixing chamber 317, it is possible to reduce or prevent the outflow of lubricating oil used in thrust bearings 328, 341 or rotating shaft bearings 329, 342 necessary for rotating the induction casing 323.

Also, each of the second sealed chamber 326 and the casing rotating chamber 335 may have an anticorrosive storage chamber 330, 343 and a ring in its lower portion. They are substantially the same as and perform substantially the same functions as the anticorrosive storage chamber 314 and the ring 316 provided in the sealed chamber 304, so a detailed description thereof will be omitted for the sake of convenience.

The upper portion of the induction casing 323 may be coupled to the outer circumference of an upper disk 324, and the lower portion of the induction casing 323 may be coupled to outer circumference of a lower disk 332. A vertical cylinder 325 may be coupled onto the inner circumference of the upper disk 324, and the vertical cylinder 325 may be introduced into the second sealed chamber 326 from the lower inlet of the second sealed chamber 326. Also, the vertical cylinder 325 may be connected to the inside of the second sealed chamber 326 by a thrust beating 328 and a rotating shaft bearing 329 while maintaining its rotational force. A vertical cylinder 333 may be coupled onto the inner circumference of the lower disk 332, and the lower end of the vertical cylinder 333 may be coupled to the casing rotating chamber 335.

Although not shown in FIG. 15, buoyancy chambers may be provided above the upper disk 324 and below the lower disk 332, similar to the buoyancy chambers described in the tidal current power generator according to the second aspect of the present invention. In the same manner, these buoyancy chambers can reduce the load exerted to the thrust bearing, and allows the whole tidal current power generator to be easily lifted up out of the surface of the water by buoyancy when repair and maintenance is required.

The top portion of the casing rotating chamber 335 may be coupled to a casing rotating shaft 336. The casing rotating shaft 336 can support the rotating shaft fixing chamber 317 while maintaining the rotational force of the rotating shaft fixing chamber 317. The casing rotating shaft 336 may be introduced into the rotating shaft fixing chamber 317 from the lower inlet of the rotating shaft fixing chamber 317, and may be connected to the inside of the rotating shaft fixing chamber 317 via a thrust bearing 319 and a rotating shaft bearing 320.

A rotating chamber support shaft 340 is introduced into the casing rotating chamber 335 from the lower inlet of the casing rotating chamber 335, and the rotating chamber support shaft 340 is connected to the inside of the casing rotating chamber 335 via a thrust bearing 341 and a rotating shaft bearing 342.

By this arrangement, the rotating shaft fixing chamber 317 can be rotated with the impeller-type rotating blade 301, and independent of this rotation, the casing rotating chamber 335 can be rotated with the induction casing 323. Thus, the position of the induction casing 323 can be appropriately controlled according to changes in the direction of fluid flow. As a result, it is possible to reduce or prevent the fluid use efficiency of the impeller-type rotating blade 301 from being decreased by changes in the direction of fluid flow.

Also, the induction casing 323 can be appropriately rotated according to changes in the direction of flow fluid while both the upper and lower portions of the induction casing 323 to be rotated are stably fixed, which makes it possible to manufacture a large-capacity tidal current power generator.

FIG. 16 is a sectional view illustrating a third embodiment of the tidal current power generator according to the third aspect of the present invention. In FIG. 16, the same or similar reference numerals will be used to designate components that are substantially the same as or similar to those of FIG. 15, and a detailed description of such components will be omitted for the sake of convenience.

Referring to FIG. 16, a second sealed chamber 326 for supporting an upper portion of an induction casing 323 while maintaining the rotational force of the induction casing 323 is disposed above a first sealed chamber 327 within which a vertical shaft generator 313 is disposed. A second sealed chamber support shaft 346 may be introduced into the second sealed chamber 326 from a lower inlet of the second sealed chamber 326. The lower end of the second chamber support shaft 346 may be coupled to the top portion of the first sealed chamber 327.

FIG. 17 is a sectional view illustrating induction casings 323, 448, a plurality of venturi fluid outlets 349, 350, 351, a tail blade 305, and an impeller-type auxiliary blade 306, which may be used in the tidal current power generator according to the third aspect of the present invention. In the description of FIG. 17, the term "front" means the direction in which fluid flows into the induction casings, and the term "rear" means the direction in which fluid flow out of the induction casings.

Referring to FIG. 17, induction casings 323, 448 may be disposed in the front of the rotating shaft of the impeller-type rotating blade 301, and a plurality of venturi fluid outlets 349, 350, 351 may be disposed in the rear of the rotating shaft of the impeller-type rotating blade 301. The plurality of venturi fluid outlets 349, 350, 351 can effectively discharge fluid to the outside while inducing the flow of fluid introduced into the inside of the induction casings 323, 448 to the rotation direction of the impeller-type rotating blade 301. More specially, by sequentially arranging the venturi fluid outlets 349, 350, 351 in ascending order of size, the venturi effect can be maximized using the atmospheric pressure difference between the venturi fluid outlets and the surrounding area.

The tail blade 305, which is intended to follow the flow direction of fluid, may have a T-shaped structure. When different reaction forces are generated while the induction casings 323, 448 induce fluid, the tail blade 305 can equalize all reaction forces generated in the respective induction casings 323, 448 by differently adjusting its leftward and rightward width to place the induction casings 323, 448 in position.

The impeller-type auxiliary blade 306 may has a form in which it projects from a concave surface of the impeller-type rotating blade 301 and extends radially outwardly from the rotating shaft of the impeller-type rotating blade 301. When the induction casings 323,448 are provided in order to improve the rotation efficiency of the impeller-type rotating blade 301, fluid flow coming into contact with the impeller-type rotating blade 301 is partially converted into inclined flow. More specially, the direction of fluid flow, which rotates the impeller-type rotating blade 301 by pushing it backward, is changed to the direction inclined with respect to the impeller-type rotating blade 301. In other words, the fluid flow is partially converted into fluid flow moving in a downwardly or upwardly inclined direction. However, by providing the impeller-type auxiliary blade 306 that meets the inclined fluid flow at right angles, the rotation efficiency of the impeller-type rotating blade 301 can be maximized.

As shown in FIG. 17, by modifying the structure of the impeller-type rotating blade 301 and properly using the induction casings 323, 448 and the plurality of venturi fluid outlets 349, 350, 351, fluid use efficiency per unit area of the impeller-type rotating blade 301 can be superior to that of a propeller-type rotating blade.

More specially, since the propeller-type rotating blade has a structure in which a plurality of vanes are fixed to one rotating shaft only on one side thereof, the vanes may be easily broken by a backward pushing-force applied by strong tidal currents or a typhoon. Thus, there is a limitation on the width of vanes, and it is difficult to use about three or more vanes. In contrast to this, the impeller-type rotating blade 301 is structurally robust to a backward pushing-force exerted thereto, and thus the width of its vanes can be increased. Therefore, since the amount of power generation per unit area of the ground on which the impeller-type rotating blade 301 is installed can be greater than the propeller-type rotating blade that may be installed in the same area, the impeller-type rotating blade is more economical as compared to the propeller-type rotating blade.

Although not shown in the drawing, the structure shown in FIG. 17, which does not include one of the induction casings (induction casing 448) and one of the venturi fluid outlets (venturi fluid outlet 351), may be employed in the tidal current power generator according to the third aspect of the present invention. Here, the tail blade 305 may be unnecessary because only one induction casing 323 is provided. FIGS. 13 to 16 show this case where only one induction casing 323 is provided. As compared to the case where two induction casings are provided, this arrangement makes it possible to reduce or prevent ropes, fishing nets, waste, or the like from being caught between the two induction casings to impede the rotation of the impeller-type rotating blade 301 or damage the impeller-type rotating blade 301.

Although exemplary embodiments of the present invention have been described for illustrative purposes, those skilled in the art will appreciate that various modifications, additions and substitutions are possible, without departing from the essential features and the scope and spirit of the invention as disclosed in the accompanying claims. Therefore, it should be appreciated that the embodiments described above are not limitative, but only illustrative.

## Claims

1. A tidal current power generator comprising:
a generator column;
an impeller-type rotating blade provided on a upper portion ofthe generator column; and
a first sealed chamber having a bottom portion formed with a lower inlet into which a rotating shaft of the impeller-type rotating blade is vertically introduced and having an inner space in which a vertical shaft generator is disposed to produce electrical energy from a rotational motion of the rotating shaft of the impeller-type rotating blade.

2. The tidal current power generator as claimed in claim 1, further comprising a rudder provided on the upper portion of the generator column to control positions ofthe impeller-type rotating blade and the vertical shaft generator according to changes in tidal current direction.

3. The tidal current power generator as claimed in claim 2, further comprising a generator top column direction control chamber constituting a second sealed chamber in which bearings for assisting rotation of the upper portion of the generator column are disposed.

4. The tidal current power generator as claimed in claim 1, wherein a rubber plate valve is provided at the lower inlet ofthe first sealed chamber.

5. The tidal current power generator as claimed in claim 1, further comprising a buoyancy chamber coupled to a lower end of the rotating shaft of the impeller-type rotating blade.

6. The tidal current power generator as claimed in claim 1, further comprising a buoyancy chamber coupled to an upper end of the generator column.

7. The tidal current power generator as claimed in claim 1, wherein a wave-shaped induction casing for increasing a rotational force of the impeller-type rotating blade is mounted to the impeller-type rotating blade.

8. The tidal current power generator as claimed in claim 7, wherein a support structure of the wave-shaped induction casing is coupled to the upper portion of the generator column.

9. The tidal current power generator as claimed in claim 1, wherein a rotating shaft shell for reducing or preventing the rotating shaft of the impeller-type rotating blade from being corroded is coupled to the rotating shaft of the impeller-type rotating blade.

10. The tidal current power generator as claimed in claim 1, wherein the generator column is divided into two or more stages by including a plurality of sub-columns that are connected to each other by a joint with a concave-convex structure.

11. The tidal current power generator as claimed in claim 1, wherein two or more vertical shaft generators and two or more impeller-type rotating blades are connected and mounted to one generator column.

12. The tidal current power generator as claimed in claim 1, wherein the first sealed chamber is filled with compressed air, inert gas, or oil.

13. The tidal current power generator as claimed in claim 1, wherein the tidal current power generator is driven by ocean currents, running water of rivers and streams, or wind forces.

14. A tidal current power generator comprising:
a sealed chamber having a bottom portion formed with a lower inlet;
an impeller-type rotating blade having a rotating shaft vertically introduced into an inner space of the sealed chamber from the lower inlet of the sealed chamber;
a vertical shaft generator disposed about the rotating shaft of the impeller-type rotating blade;
a rotating shaft fixing chamber coupled to a lower portion of the rotating shaft of the impeller-type rotating blade to prevent the rotating shaft of the impeller-type rotating blade from vibrating and twisting while maintaining a rotational force of the rotating shaft of the impeller-type rotating blade, the rotating shaft fixing chamber having a bottom portion formed with a lower inlet; and
a fixing chamber support shaft vertically introduced into an inner space of the rotating shaft fixing chamber from the lower inlet of the rotating shaft fixing chamber.

15. The tidal current power generator as claimed in claim 14, wherein one or more of the sealed chamber and the rotating shaft fixing chamber have an anticorrosive storage chamber, in which an anticorrosive lighter than seawater is stored, in a lower portion thereof.

16. The tidal current power generator as claimed in claim 14, wherein a recess is formed between the lower inlet of the sealed chamber and a portion of the rotating shaft of the impeller-type rotating blade, which is adjacent to the lower inlet of the sealed chamber, and a concave-shaped ring is inserted into the recess.

17. The tidal current power generator as claimed in claim 14, wherein a recess is formed between the lower inlet of the rotating shaft fixing chamber and a portion of the fixing chamber support shaft, which is adjacent to the lower inlet of the rotating shaft fixing chamber, and a concave-shaped ring is inserted into the recess.

18. The tidal current power generator as claimed in claim 14, further comprising a thrust bearing disposed in an upper portion of the rotating shaft of the impeller-type rotating blade in order to vertically connect the rotating shaft of the impeller-type rotating blade and the sealed chamber while maintaining a rotational relation between the rotating shaft of the impeller-type rotating blade and the sealed chamber.

19. The tidal current power generator as claimed in claim 14, further comprising a rotating shaft bearing disposed between the rotating shaft of the impeller-type rotating blade and the sealed chamber in order to prevent right and left shaking while maintaining a rotational relation between the rotating shaft of the impeller-type rotating blade and the sealed chamber.

20. The tidal current power generator as claimed in claim 14, further comprising a thrust bearing disposed in an upper portion of the fixing chamber support shaft in order to vertically connect the rotating shaft fixing chamber and the fixing chamber support shaft while maintaining a rotational relation between the rotating shaft fixing chamber and the fixing chamber support shaft.

21. The tidal current power generator as claimed in claim 14, further comprising a rotating shaft bearing disposed between the rotating shaft fixing chamber and the fixing chamber support shaft in order to prevent right and left shaking while maintaining a rotational relation between the rotating shaft fixing chamber and the fixing chamber support shaft.

22. The tidal current power generator as claimed in claim 14, further comprising:
a direction control chamber disposed below the rotating shaft fixing chamber, having an upper portion connected to a lower end of the fixing chamber support shaft, and having a bottom portion formed with a lower inlet; and
a direction control chamber support shaft vertically introduced into an inner space of the direction control chamber from the lower inlet of the direction control chamber.

23. The tidal current power generator as claimed in claim 22, wherein the direction control chamber may have an anticorrosive storage chamber, in which an anticorrosive lighter than seawater is stored, in a lower portion thereof.

24. The tidal current power generator as claimed in claim 22, wherein a recess is formed between the lower inlet of the direction control chamber and a portion of the direction control chamber support shaft, which is adjacent to the lower inlet of the direction control chamber, and a concave-shaped ring is inserted into the recess.

25. The tidal current power generator as claimed in claim 22, further comprising a thrust bearing disposed in an upper portion of the direction control chamber support shaft in order to vertically connect the direction control chamber and the direction control chamber support shaft while maintaining a rotational relation between the direction control chamber and the direction control chamber support shaft.

26. The tidal current power generator as claimed in claim 22, further comprising a rotating shaft bearing disposed between the direction control chamber and the direction control chamber support shaft in order to prevent right and left shaking while maintaining a rotational relation between the direction control chamber and the direction control chamber support shaft.

27. The tidal current power generator as claimed in claim 22, further comprising:
disks that are rotatable centered on the rotating shaft of the impeller-type rotating blade, the disks including an upper disk disposed above the impeller-type rotating blade and a lower disk disposed below the impeller-type rotating blade and coupled to a side of the direction control chamber;
a triangular-shaped induction casing coupled to one of the disks; and
a direction control blade coupled to the other disk.

28. The tidal current power generator as claimed in claim 27, further comprising debris guards provided on circumferences of the disks to prevent foreign materials from entering through gaps between the impeller-type rotating blade and the disks.

29. The tidal current power generator as claimed in claim 27, further comprising an induction casing support structure connected to the direction control blade to support the induction casing.

30. The tidal current power generator as claimed in claim 29, wherein the induction casing support structure is not fixed to a column positioned thereabout, and thus the induction casing can be easily moved to an appropriate position according to changes in tidal current direction.

31. The tidal current power generator as claimed in claim 27, further comprising a direction control auxiliary blade provided on the upper disk to assist in controlling a position of the induction casing.

32. The tidal current power generator as claimed in claim 22, wherein the direction control chamber support shaft is mounted to one generator column, and a lower end of the direction control chamber support shaft is coupled to an upper end of the generator column by a concave-convex connection structure.

33. The tidal current power generator as claimed in claim 32, wherein an L-shaped rim is provided on a circumference of the upper end of the generator column.

34. The tidal current power generator as claimed in claim 32, wherein an anticorrosive pocket having a concave-convex shape corresponding to the concave-convex connection structure and infiltrated with an anticorrosive heavier than seawater is inserted between the lower end of the direction control chamber support shaft and the upper end of the generator column.

35. The tidal current power generator as claimed in claim 14, wherein the rotating shaft fixing chamber is coupled to a lower portion of the rotating shaft of the impeller-type rotating blade to prevent the rotating shaft of the impeller-type rotating blade from vibrating and twisting while maintaining a rotational force of the lower portion of the rotating shaft of the impeller-type rotating blade, and the vertical shaft generator is mounted to an upper portion of the rotating shaft of the impeller-type rotating blade.

36. The tidal current power generator as claimed in claim 35, wherein the vertical shaft generator comprises a rotating-field generator.

37. The tidal current power generator as claimed in claim 14, wherein the rotating shaft fixing chamber is coupled to an upper portion of the rotating shaft of the impeller-type rotating blade to prevent the rotating shaft of the impeller-type rotating blade from vibrating and twisting while maintaining a rotational force of the upper portion of the rotating shaft of the impeller-type rotating blade, and the vertical shaft generator is mounted to a lower portion of the rotating shaft of the impeller-type rotating blade.

38. The tidal current power generator as claimed in claim 37, wherein the vertical shaft generator comprises a rotating-armature generator.

39. The tidal current power generator as claimed in claim 14, wherein the vertical shaft generator may be mounted to one column or between one column and one or more other columns standing by the one column.

40. The tidal current power generator as claimed in claim 14, wherein a plurality of vertical shaft generators may be mounted between a plurality of columns arranged lengthwise and crosswise.

41. A tidal current power generator comprising:
a first sealed chamber having a bottom portion formed with a lower inlet and having an inner space in which a vertical shaft generator is disposed;
an impeller-type rotating blade having a rotating shaft vertically introduced into the inner space of the first sealed chamber from the lower inlet of the first sealed chamber;
a rotating shaft fixing chamber rotated with the rotating shaft of the impeller-type rotating blade and having a bottom portion formed with a lower inlet;
a casing rotating shaft vertically introduced into an inner space of the rotating shaft fixing chamber from the lower inlet of the rotating shaft fixing chamber;
a casing rotating chamber rotated with the casing rotating shaft and having a bottom portion formed with a lower inlet;
a rotating chamber support shaft vertically introduced into an inner space of the casing rotating chamber from the lower inlet of the casing rotating chamber; and
an induction casing rotated with the casing rotating chamber to increase rotation efficiency of the impeller-type rotating blade.

42. The tidal current power generator as claimed in claim 41, further comprising a second sealed chamber having a bottom portion formed with a lower inlet, an upper portion of the induction casing is connected to the second sealed chamber, and a lower portion of the induction casing is connected to the casing rotating chamber.

43. The tidal current power generator as claimed in claim 42, wherein the upper portion of the induction casing is connected to the second sealed chamber via a vertical cylinder and/or the lower portion of the induction casing is connected to the casing rotating chamber via a vertical cylinder.

44. The tidal current power generator as claimed in claim 42, further comprising a thrust bearing for connecting the inner space of the second sealed chamber and the upper portion of the induction casing while maintaining a rotational force of the induction casing.

45. The tidal current power generator as claimed in claim 41, further comprising a thrust bearing for connecting the casing rotating chamber and the rotating chamber support shaft while maintaining a rotational force of the casing rotating chamber.

46. The tidal current power generator as claimed in claim 41, wherein one or more of the first sealed chamber, the rotating shaft fixing chamber and the casing rotating chamber have an anticorrosive storage chamber, in which an anticorrosive lighter than seawater is stored, in a lower portion thereof.

47. The tidal current power generator as claimed in claim 41, wherein a recess is formed between the lower inlet of the first sealed chamber and the rotating shaft of the impeller-type rotating blade, between the lower inlet of the rotating shaft fixing chamber and the casing rotating shaft, and/or between the lower inlet of the casing rotating chamber and the rotating chamber support shaft, and a concave-shaped ring is inserted into the recess.

48. The tidal current power generator as claimed in claim 41, further comprising a second sealed chamber disposed below the first sealed chamber and having a bottom portion formed with a lower inlet.

49. The tidal current power generator as claimed in claim 41, further comprising:
a second sealed chamber disposed above the first sealed chamber and having a bottom portion formed with a lower inlet and a top portion formed with an upper inlet; and
a second sealed chamber support shaft coupled to a top portion of the first sealed chamber and passing through the lower and upper inlets of the second sealed chamber.

50. The tidal current power generator as claimed in claim 41, wherein the vertical shaft generator uses the rotating shaft of the impeller-type rotating blade as a vertical shaft thereof.

51. The tidal current power generator as claimed in claim 41, further comprising a buoyancy chamber coupled to a lower end of the rotating shaft of the impeller-type rotating blade.

52. The tidal current power generator as claimed in claim 41, wherein the induction casing incorporates a plurality of venturi tubes disposed on a side thereof where fluid flows out of the induction casing and having outlets that are sequentially enlarged in width.

53. The tidal current power generator as claimed in claim 41, wherein the induction casing is attached with a T-shaped tail blade having a leftward and rightward width that can be differently adjusted in order to balance each reaction force ofthe induction casing.

54. The tidal current power generator as claimed in claim 41, wherein the impeller-type rotating blade incorporates an impeller-type auxiliary blade projecting from a concave surface of the impeller-type rotating blade and extending radially outwardly from the rotating shaft of the impeller-type rotating blade.

55. The tidal current power generator as claimed in claim 54, wherein the impeller-type auxiliary blade allows a direction of fluid flow, which rotates the impeller-type rotating blade by pushing it backward, to be orthogonal to the impeller-type rotating blade.

56. The tidal current power generator as claimed in claim 41, further comprising:
a second sealed chamber having a bottom portion formed with a lower inlet;
an upper disk having an out circumference coupled to an upper portion of the induction casing; and
a vertical cylinder introduced into the second sealed chamber from the lower inlet of the second sealed chamber and coupled to an inner circumference of the upper disk.

57. The tidal current power generator as claimed in claim 56, wherein the vertical cylinder is connected to an inside of the second sealed chamber via a thrust bearing while maintaining a rotational force thereof.

58. The tidal current power generator as claimed in claim 41, further comprising:
a lower disk coupled to a lower portion of the induction casing; and
a vertical cylinder having an upper end coupled to an inner circumference of the upper disk and having a lower end coupled to the casing rotating chamber.
